# EUROPEAN PATENT SPECIFICATION

(11) **EP 1 383 711 B1**
(45) Date of publication and mention of the grant of the patent: **08.06.2005**
(21) Application number: 02722532.5
(22) Date of filing: 02.04.2002
(51) Int. Cl.: C02F 1/469, B01D 61/54, A47L 15/42

(54) **HOUSEHOLD APPARATUS USING A FLUID, COMPRISING A PURIFYING SYSTEM OF THE TYPE IN WHICH AT LEAST A SUBSTANCE MUST BE REMOVED FROM SAID FLUID**
FLÜSSIGKEITFÜHRENDES HAUSHALTGERÄT MIT EINER REINIGUNGSVORRICHTUNG, DIE MINDESTENS EINE SUBSTANZ AUS DIESER FLÜSSIGKEIT ENTFERNT
APPAREIL MENAGER EMPLOYANT UN LIQUIDE ET COMPORTANT UN TYPE DE SYSTEME DE PURIFICATION DANS LEQUEL AU MOINS UNE SUBSTANCE DOIT ETRE ELIMINEE DUDIT LIQUIDE

(30) Priority: 02.04.2001 IT TO20010314
(43) Date of publication of application: 28.01.2004
(73) Proprietor: ELTEK S.p.A., I-15033 Casale Monferrato (Alessandria) (IT)
(72) Inventor: GADINI, Constanzo, I-15040 Frassineto Po (AL) (IT); FIORINI, Andrea, I-15033 Casale Monferrato AL (IT)
(74) Representative: Dini, Roberto, Dr. Ing.
(86) International application number: PCT/IB2002/001018
(87) International publication number: WO 2002/079098

(56) References cited:
- EP-A- 0 417 506
- WO-A-95/32052
- GB-A- 1 551 538
- US-A- 2 825 666
- US-A- 3 003 940
- US-A- 3 847 765
- US-A- 4 671 863

## Description

The present invention relates to a household apparatus using a fluid, comprising a purifying system, in which at least a substance must be removed from said fluid, in particular a water softener system.

A system as above is described with reference to the Figures 1-3 of WO 00/64325. In this system an electro-deionising cell is provided, which has two electrodes between which anionic and cationic membranes type delimit a plurality of first and second channels containing water softening resins; the water to be softened flows in the first channels, whereas the water flowing in the second channels will regenerate the above resins, i.e. receive the ions causing calcareous formation, which is removed by the resins from the water flowing in the first channels.

The solution described in WO 00/64325, though averagely reliable, has some practical drawbacks of practical type, due to the system operation.

In particular, the system described in WO 00/64325 substantially provides an "immediate" softening process, in the sense that the water to be softened is treated as it is gradually supplied from the water main, with simultaneous resins regeneration.

A solution as above requires the use of a cell of considerable dimensions due to the instantaneous treatment required of a significant quantity of water; these big dimensions of the cell make its housing difficult inside the tiny spaces available in a household apparatus; a further problem related to the big dimensions of the cell is that also the membranes and electrodes used inside it will have significant dimensions, entailing a high industrial manufacturing cost.

On the other hand, the use of an "immediate" softening and regenerating system as described above, with a small cell, also entails a proportional flow-rate reduction of a few litres per hour.

This condition does not only request a much longer time for filling the appliance tub, but abnormal operating conditions were also noticed; in fact, the reduced flow-rate in the event of very hard water will actually create particular chemical conditions causing a high precipitation of the chemical compounds inside the cell, such as a high acidity and/or basicity, which causing the consequent permanent deterioration of the cell membranes in time.

In this frame, it is the object of the present invention to solve the above drawbacks and provide further new efficient embodiments of a system for purifying a fluid used in a household apparatus, in particular for water softening.

In order to reach this purpose, it is the object of the present invention to provide a household apparatus using a fluid, comprising a purifying system in which at least a substance must be removed from said fluid, in particular a water softener system, incorporating the features of the annexed claims, which form an integral part of the present description.

Further objects, features and advantages of the present invention will become apparent from the following detailed description and annexed drawings, which are supplied by way of non limiting example, wherein:
- Fig. 1 shows the basic diagram of a first possible embodiment of a water softening system according to the present invention, for non limiting application to a washing machine, in a first operating condition;
- Fig. 2 shows a detail of the system of Fig. 1;
- Fig. 3 shows the system of Fig. 1 in a second operating condition;
- Fig. 4 shows the system of Fig. 1 in a third operating condition;
- Fig. 5 shows the system of Fig. 1 in a fourth operating condition;
- Fig. 6 shows a first possible embodiment of the system of Fig. 1;
- Fig. 7 shows a second possible embodiment of the system of 1;
- Fig. 8 shows a third a possible embodiment of the system of Fig. 1.

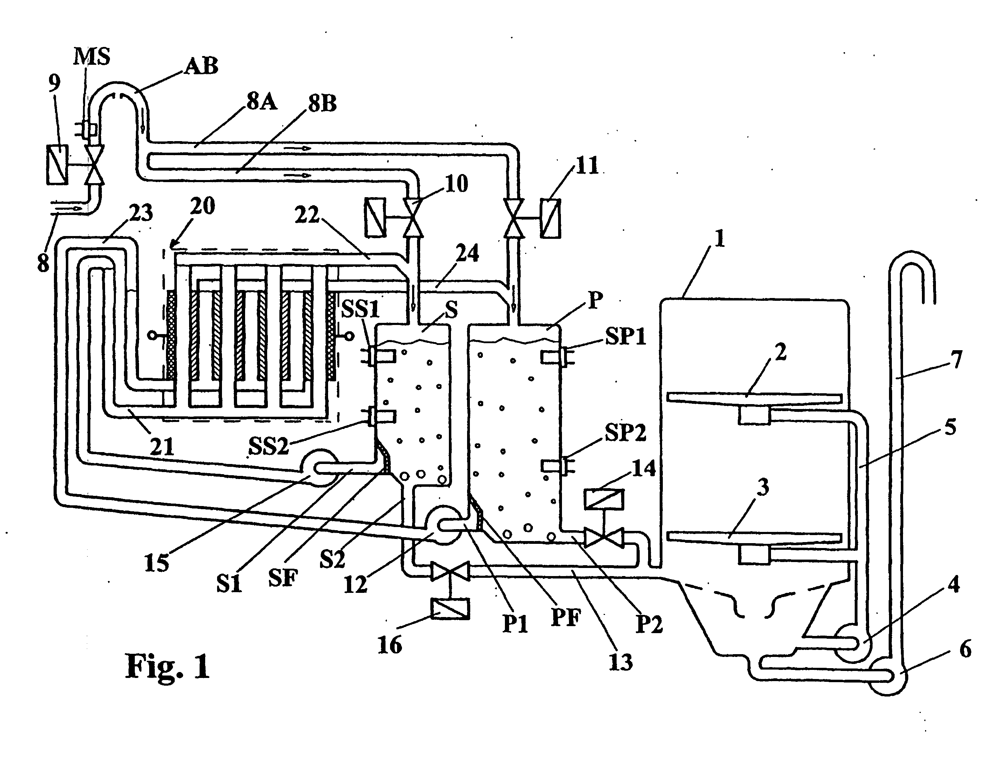

In Fig. 1, reference 1 indicates schematically a treatment container or washing tub of a washing machine according to the present invention, comprising a system for treating or purifying a fluid, of the type in which at least a substance should be removed from at least a portion of the fluid; in the example, the above system is provided for reducing water hardness.

The washing machine represented is a standard dishwasher, with wash fluid sprayers arranged in the washing tub 1, consisting of two common rotary sprayer arms 2 and 3; reference 4 indicates a common washing or circulation pump, for sucking the wash fluid from the bottom of the tub 1 and convey it through an appropriate duct 5 to the arms 2 and 3.

Reference 6 indicates a common discharge pump, for discharging the fluid used in the tub; to this purpose, the pump outlet 6 is connected to a suitable discharge hose 7.

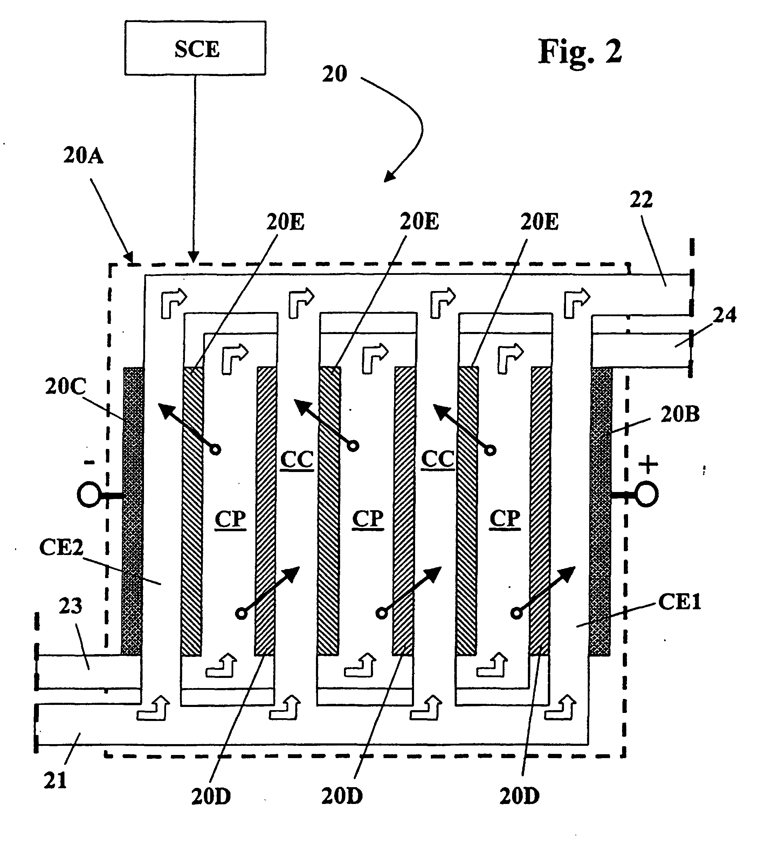

Reference 8 indicates a water intake duct from a household water main, on which an inlet valve 9 is provided; the valve 9 is a common valve controlled by the machine control system, schematically represented with SCE in Fig. 2, ensuring clean water intake for washing within the times and according to appropriate procedures; on the duct 8 may be fitted sensing means, schematically indicated with MS, being apt to detect some operating parameters of the inlet water, such as water flow-rate, pressure, conductivity or resistivity, temperature, hardness degree, acidity degree or pH of the water, etc.

The duct 8, downstream of the valve 9, has a so-called air-break or backflow device indicated with AB; downstream of the air-break AB, the duct 8 branches off in two separate ducts 8A and 8B, which feed a first tank P and a second tank S, respectively. Along the above ducts 8A and 8B, upstream the inlets of the tanks P and S, respective common valves 10 and 11 are provided, which are controlled by the machine control system.

The tanks P and S comprise each one appropriate sensing means; the sensors indicate with SP1 and SS1 are provided for detecting "quantitative" features of the water in the tanks P and S, such as flow-rate, pressure, level, temperature, etc., whereas the sensors SP2 and SS2 are provided for detecting "qualitative" or electrochemical features of the water in the tanks P and S, such as conductivity or resistivity, hardness degree, acidity degree or pH, etc.

The tank P has a first outlet P1, in communication with the suction branch of a commonly known pump 12 controlled by the machine control system, and a second outlet P2, in communication with a water inlet duct 13 into the tub 1 of the machine; a common valve 14 controlled by the machine control system, operates on this outlet P2 of the tank P; the tank P also comprises a suitable filter indicated with PF in line with the outlet P1.

It should be noticed how the lower section of the tank P is in the form of a "trap", e.g. with a portion of reduced section; the outlet P2 allows water downflow substantially from the lowest point of the tank P, whereas the outlet P1 allows water downflow substantially above the trap portion previously mentioned; the function of this special lower section configuration of the tank P will be further described.

Also the tank S has two outlets, the first one indicated with S1 communicating with the suction branch of a common pump 15 controlled by the machine control system; the second outlet of the tank S indicated with S2 communicating with the above water inlet duct 13 to the tub 1 of the machine; a common valve 16 controlled by the machine control system operates on the outlet S2 of the tank S; also the tank S comprises a suitable filter indicated with SF in line with the outlet S1; also the lower section of the tank S is in the form of a "trap" so that the outlet S2 allows water downflow substantially from the lower point of the tank S, whereas the outlet S1 allows water downflow substantially above the trap portion for the purposes to be further described.

It should be noticed how the various valves of the above system are electric and normally closed types; therefore, for the purposes of this description, they are assumed in their closed condition, save when otherwise specified.

Reference 20 indicates a decalcifier or softener device in its whole of the type electrochemical or electro-dialysis or electro-osmosis cell, which has two inlet ducts 21 and 23 in its lower section and two outlet ducts 22 and 24 in its upper section.

The inlet duct 21 is hydraulically connected to the delivery branch of the pump 15, whereas the inlet duct 23 is hydraulically connected to the delivery branch of the pump 12; the outlet duct 22 is hydraulically connected to the tank S or duct 8B in a location downstream the valve 10; the outlet duct 24, vice-versa, is hydraulically connected to the tank P or duct 8A in a location downstream the valve 11.

The decalcifier 20 may comprise appropriate sensing means, not represented in the figures, for detecting "quantitative" and/or "qualitative" operating parameters, such as the flow-rate, pressure, conductivity or resistivity, temperature, hardness degree, acidity degree or pH of the water flowing in and out of the decalcifier 20, etc.

Fig. 2 is showing schematically the decalcifier 20 more in detail, which comprises a body 20A, e.g. made from thermoplastic material.

Inside the body 20A, respective electrodes are arranged on both lengthwise ends, in particular a positive electrode or anode 20B and a negative electrode or cathode 20C. By mere way of example the electrodes 20B and 20C can be made from titanium and have a platinum coating or other noble metal oxides (such as ruthenium or iridium).

Appropriate ion exchange membranes of common type are arranged between the anode 20B and cathode 20C, for delimiting a set of channels inside the body 20A. In particular, reference 20D indicates permeable membranes to the anions, i.e. the ions having one or more negative electric charges, which migrate towards an anode during an electro-dialysis process or anyway owing to an electric current or voltage; reference 20E, on the contrary, indicates permeable membranes to the cations, i.e. the ions having one or more positive electric charges, which migrate towards a cathode during electro-dialysis or owing to an electric current or voltage.

As it will be noticed, the membranes 20D are alternated to the membranes 20E, for delimiting inside the body 20A:
- two "electrodes channels", indicate with CE1 and CE2, extending in the non limiting example of Fig. 2 between the anode 20B and a membrane 20D, and between the cathode 20C and a membrane 20E, respectively;
- at least a "concentrate channel" CC, delimited by a membrane 20E and a membrane 20D; in the example two channels CC are provided;
- at least a "purifying channel", indicates with CP, extending between a membrane 20D and a membrane 20E; the example provides three channels CP.

In the non limiting example of Fig. 2, the electrodes channels CE1 and CE2 and the concentrate channels CC are interconnected in parallel to the inlet duct 21 and outlet duct 22 both at their lower and upper ends, respectively, whereas the purifying channels CP are connected in parallel to the inlet duct 23 and outlet duct 24 both at their lower end and upper ends, respectively.

Operation of the dishwashing machine described above is as follows.

Fig. 1 illustrates a condition of water inlet from the water main; this step may be for example the first water inlet step provided by a standard wash cycle of the machine incorporating the invention.

To this purpose, the machine control system, schematically indicated with SCE in Fig. 2, will open the valves 9, 10 and 11, keep the valves 14 and 16 closed and maintain the pumps 12 and 15 deactivated; so, the water come from the water main can flow in the duct 8, overcome the air-break AB and flow then to the tanks P and S through the ducts 8A and 8B.

It should be noticed how the water portion unable to cross the air-break AB is commonly conveyed inside into the tub 1; this water will not be softened, but it is quite a small quantity and such not to affect the washing quality negatively; anyway, in alternative, the water unable to overcome the air-break AB may be commonly conveyed to one of the tanks P or S.

The valves 9, 10 and 11 are closed after filling the tanks P and S with enough water for the purposes to be further described; it should be noticed how water dosage in the tanks P and S and the relevant closure of the valves 9-11 can be obtained through any common technique; as said, each tank P and S can be fitted with respective level sensing means (e.g. pertaining to SS1 and SP1), such as a floating sensor, a pressuremeter or preferably a turbine flowmeter, of common make and operation.

When filling the tanks P e S, the control system also provides for controlling the water features through the sensors SS2, SP2, which are apt to detect water conductivity or resistivity and/or hardness and/or acidity or pH, etc., establishing automatically the quantity of water required and whether it should be softened or discharged directly from the tanks P and/or S into the washing tub.

In particular, the quantity of water to be filled in the tank S is automatically changed by the control system proportionally to the hardness of the water to be treated, i.e. of the water coming from the inlet of the duct 8.

Should the water have a hardness exceeding preset limits, it will have to rest for a certain time, e.g. a few minutes, during which the likely impurities in the water can decant and deposit in the lower areas of the tanks P and S having the form of a trap; these impurities may be sand, iron rests or rust, etc., and are illustrated in Fig. 1 by the circles with a larger diameter in the lower section of the tanks P and S (whereas the circles with a smaller diameter represent the cations, such as calcium and magnesium, i.e. those ions with a positive electric charge causing calcareous production).

Once "decanting" time is over, the machine control system supplies the pumps 12 and 15. Thus, the water in the tank P will flow through the duct 23 into the purifying channels CP of the decalcifier 20 and return to the tank P through the duct 24, due to the closed valve 11; the same applies for the water in the tank S, which will flow through the duct 21 into the electrodes channels CE1 and CE2 and concentrate channels CC of the decalcifier 20 and return to the tank S through the duct 22, due to the closed valve 10.

The flow speed in the internal channels of the decalcifier is preferably maintained constant at a predetermined value; in alternative, the flow speed value can be calculated from time to time by the control system based on measurements performed according to predetermined algorithms or predefined data tables; this speed may also change, i a controlled way (steps), during the various cycle steps of the treatment; in this frame, the control system will be programmed to change the speed of the pumps 12 and/or 15 or change the flow speed operating on respective proportional valves or variable flow-rate controllers.

It should be noticed how the water sucked from the tanks P and S and sent to the decalcifier 10 is filtered by the filters PF and SF before being conveyed to the decalcifier 20; the arrangement of the filters PF and SF, through which the water from the main is not flowing through immediately (this water being subject to preventive "decanting"), ensures a minor clogging risk; this risk is further reduced by the filters PF and SF having significant dimensions in the available space in the tanks P and S and by the fact that likely impurities are deposited on the bottom of the tanks themselves, as previously explained; moreover, suitable means not represented may be provided in line with the ducts P1 and S1, such as labyrinth paths being apt to prevent a "eddy" or suction of the decanted material.

Simultaneously to the activation of the pumps 12 and 15, the control system SCE of the machine will supply direct electric voltage between the anode 20B and cathode 20C of the decalcifier 20.

Thus, the electric current going through the decalcifier 20 induces the migration of the calcium and magnesium cations contained in the water flowing in the purifying channels CP, towards the cathode 20C, through the permeable membranes to the cations 20E; whereas due to the electric current the anions will migrate towards the anode 20B, through the permeable membranes to the anions 20D.

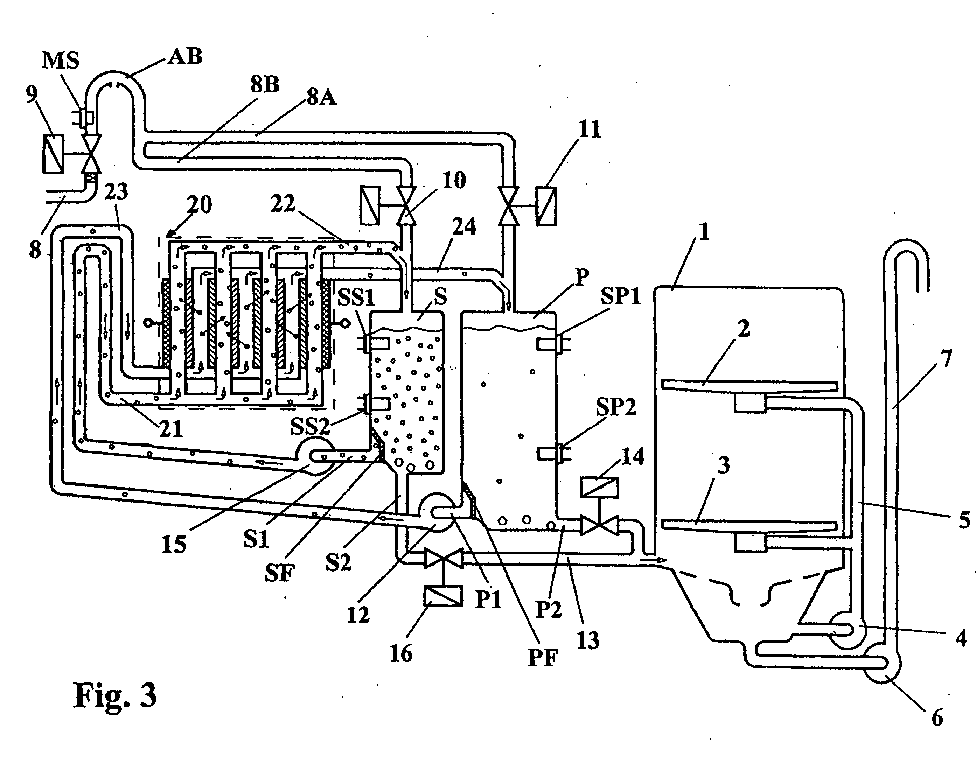

In this situation, illustrated in the Figures 2 and 3, the permeable membranes to the cations 20E hinder the anions from migrating towards the anode 20B and the permeable membranes to the anions 20D hinder the cations from migrating towards the cathode 20C.

Therefore this process leads to a progressive reduction of cations concentration inside the channels CP; in particular, for the purposes of the present invention, the calcium and magnesium cations in the purifying channels CP will gradually transfer into the concentrate channels CC and channel CE2 of the cathode 20C.

Therefore, as it will be noticed, according to the present invention, the electrochemical or electro-dialysis softening process is obtained with water recirculation inside the decalcifier 20; this to establish a progressive hardness reduction of the water contained in the tank P, flowing in the channels CP and, conversely, cause a progressive hardness increment of the water in the tank S, which flows in the channels CE1, CE2 and CC.

According to the above embodiment, water inlets 21 and 23 in the decalcifier 20 are preferably located in its lower section, so that the water will flow through the various inner channels CE1, CE2, CC and CP from the bottom upwards.

It should also be considered how the above decalcification may cause gas production (hydrogen, oxygen, and so on), e.g. in line with the electrodes 20B and 20C; as a result, should the above channels be supplied from the top downwards, gas stagnation or gas "bags" may form in the ricirculation hydraulic circuit, being capable of affecting system operation negatively. The suggested solution, i.e. water flowing through the various inner channels CE1, CE2, CC and CP from the bottom upwards, will prevent such a drawback; moreover, it is preferable to have the flows in the various channels P and S in the same circulation direction, i.e. not counter-current.

The softening process, and consequently water circulation between the tanks P and S and the decalcifier 20, can be timed, i.e. for a preset time, or its duration can be programmed for a certain number of water passes through the decalcifier 20.

Advantageously, this time or preset number of passes can change depending on the hardness degree of the inlet water to the machine, being detected e.g. by the sensing means MS.

In this frame, should for instance the hardness degree of the inlet water to the duct 8 measured through the sensing means MS, be higher than a preset threshold but of limited value, the machine control system programmed to that purpose will submit the water to a time or number of softening passes relatively low, vice-versa, should hardness be high, then the water treatment time would be longer; anyway, in the above example the treatment will continue until the control system detects through the sensing means SS2, SP2 that the preset or calculated value has been reached.

The machine control system can also be advantageously programmed to avoid execution of the softening process, should the hardness degree of the inlet water measured by the sensing means MS be low enough or below a preset value.

According to an advantageous embodiment of the present invention, duration of the softening process with continuous recirculation may depend on the achievement of a determined degree of water softening; in other words, according to this approach, water recirculation and consequently the softening process will go on until the appropriate sensing means SP, inside the tank P, will detect a water hardness reduction below a threshold preset or calculated by the control system.

The control system SCE comprises at least a microprocessor or micro-controller, and appropriate memory means, such as RAM, ROM, PROM, EPROM, EEPROM, etc. These memory means are provided in particular for containing data tables and/or elaboration programs for detecting and/or calculating said measurement values or reference limits, in order to operate the appropriate system actuators (valves, pumps, etc.).

Moreover, the washing machine can be fitted with visual means, such as LED or LCD, and/or data input means, such as push-buttons or a keyboard, for the machine installer and/or user to verify and/or modify at least a few operating parameters.

The above control system may either be integrated or pertain to the control system of the household apparatus, or operate as an independent control system interacting with the control system of the household apparatus, receiving and/or transmitting information or control signals.

In addition, the final hardness threshold may be advantageously changed within one same operation cycle of the washing machine, according to the function of the softened water during the cycle itself. In other words, the machine control system can be programmed for water treatment, by means of the decalcifier 20 and tanks P and S, following a different procedure according to the wash cycle step to be executed: for instance, a higher residual hardness of the water used for a pre-wash or intermediate rinse will be accepted compared to the hardness degree of the water being used for a strict wash step or final rinse.

Thus, time can be further saved for both the treatment and total operation cycle of the washing machine, as well as also for the quantity of water required in the waste tank S.

As mentioned above, the quantity of water required in the tank S, for correct operation without precipitations due to excessive concentration, depends on the quantity of waste substance actually removed from the water contained in the tank P.

In the instance of a water treatment for the purposes of a pre-wash, intermediate rinse or low temperature cycle, or anyway any time a higher residual hardness than for the other cycle steps is assumed acceptable, the quantity of waste removed will be smaller and consequently also the water contained in the tank S can be less.

As previously explained, the quantity of water to be filled in the tank S is automatically changed by the control system proportionally to the hardness of the water to be treated, i.e. in the instance of a high hardness of the water to be treated, a higher quantity of water will be filled in the tank S, so as to avoid an excessive concentration of calcium or other waste elements, with a consequent precipitation and clogging risk. Vice-versa, in the instance of a low hardness of the water to be treated, a smaller quantity of fluid will be filled in the tank S, with a consequent water saving; in fact, filling an equal quantity of water in the tank P, the quantity of water filled in the tank S will be different, but such to fulfil the functions without any waste excess and without the risk to have an final waste product excessively concentrated.

At any rate, when the decalcifying process is terminated, the control system will stop electric voltage supply between the electrodes 20B and 20C and power supply to the circulation pumps 12 and 15; as a result, the tank P will contain purified or softened water, whereas the tank S contains water with an incremented ions contents (cations and anions), also with calcium and magnesium cations contributing to hardness production.

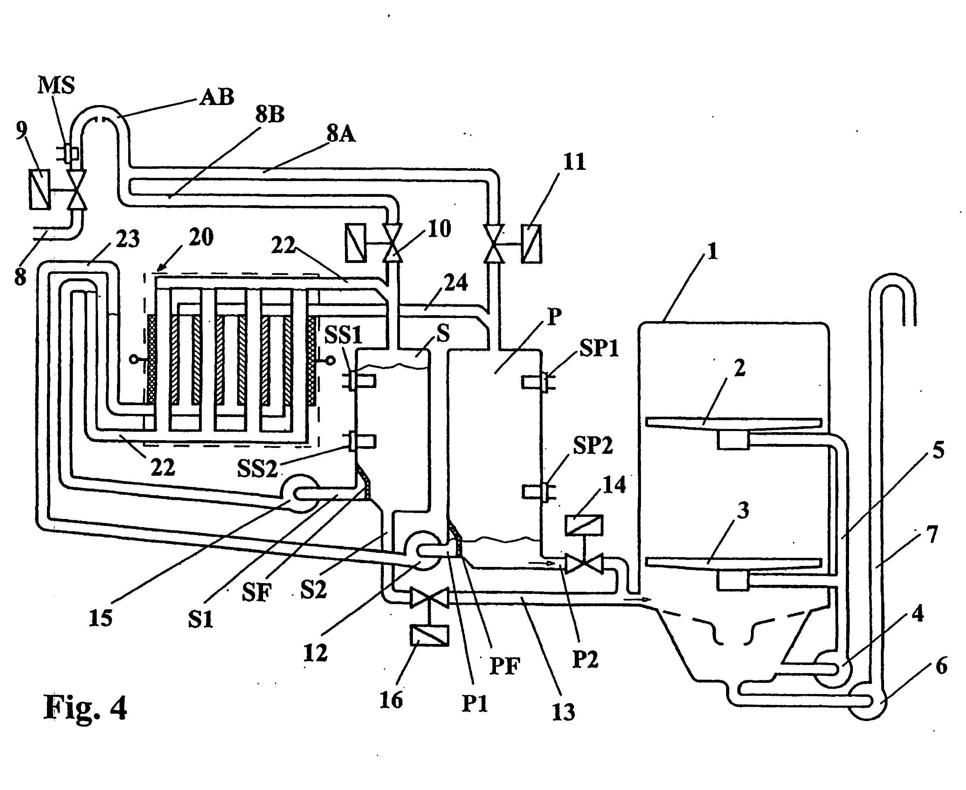

As it will be noticed, the above hydraulic system is so designed that at least the various channels of the decalcifier 20 are practically always filled with water, as illustrated in Fig. 4, also after shutting off the pumps 12 and 15; thus, a certain quantity of water remains inside the decalcifier 20 also during its rest or inactive steps, warranting the immersion of the membranes 20D and 20E in the water, or just maintaining them humid to avoid their drying up and deterioration; in the example illustrated in the figures, this purpose is obtained through a special configuration and arrangement of the inlet ducts 21 and 23 with respect to the outlet ducts 22 and 24, the first ones actually providing a siphon effect (on the other hand, the same purpose may be obtained using any other known technique, such as providing suitable valves on the above inlet/outlet ducts).

At the end of the softening process described above, the control system of the machine will instruct the valve 14 to open.

As a result, the water contained in the tank P can flow into the duct 13, and from it to the washing tub 1 of the machine, as illustrated in Fig. 4; it is noticed that the first portion of this water reaching the tub 1 has the impurities eventually deposited on the bottom of the tank P, which will be trapped by a further filtering system of the apparatus or anyway prove ineffective for the typical dishwasher operation.

The crockery are then washed according to the known procedures, through the pump 4, the circuit 5 and the sprayer arms 2 and 3, followed by a discharge of the fluid utilized in the tub 1 activating the pump 6.

To this purpose the control system SCE is obviously programmed for supervising the typical operation of a washing machine, i.e. controlling water intake in the tub, as explained above, water heating through a common heater if required, activating the washing or circulation pump 4, activating the discharge pump 6, dispensing the washing agents and/or rinse additives, and so on.

Once the above discharge is over, the control system of the machine will request a new water intake from the water main, for performing the second stage of the wash cycle.

In a non limiting example of the operation cycle, the control system of the machine will instruct the valves 9 and 11 to open, while the valves 14 and 16, as well as the valve 10 remain closed; during this step both pumps 12 and 15 are deactivated.

Thus, the water from the water main can flow through the duct 8, overcome the air-break AB and further to the tank P through the duct 8A; it should be noticed that the water used for softening purposes in the previous cycle step is contained in the tank S.

When the tank P is filled with the required quantity of water, the valves 9 and 11 are closed, and the water supplied in the tank P allowed to "decant" as described above; thereafter the control system of the machine will activate the pumps 12 and 15.

Again, through the duct 23 the water in the tank P flowing in the purifying channels CP and returned to the tank P through the duct 24 due to the valve 11 being closed; the water in the tank S flowing through the duct 21 in the electrodes channels CE1 and CE2 and in the concentrate channels CC, and will finally return to the tank S through the duct 22 due to the valve 10 being closed.

Following activation of the pumps 12 and 15, the control system SCE of the machine will simultaneously supply direct electric voltage between the anode 20B and the cathode 20C of the decalcifier 20, for obtaining water softening contained in the tank P according to the procedures described above.

This softening process under constant recirculation causes a gradual hardness reduction of the water of the tank P flowing in the channels CP; through the same process, on the other hand, is obtained a further gradual hardness increase of the water of the tank S flowing in the channels CE1, CE2 and CC.

When the softening process is ended, the control system will stop supply of the above electric voltage between the electrodes 20B and 20C and power supply to the circulation pumps 12 and 15; therefore, the tank P will contain softened water, whereas the water in the tank S is further loaded with calcium and magnesium cations.

The control system of the machine provides then to open the valve 14 so that the water of the tank P can flow in the duct 13 and reach the tub 1 of the machine; crockery washing will be executed as per the previous step according to common procedures.

The same water intake and softening process as previously described, is repeated for all the steps provided by the wash cycle.

From the above it is clear how according to the suggested solution, the same water originally supplied in the tank S is used for performing several softening steps of the water gradually supplied in the tank P; the solution according to the invention will ensure a substantial reduction of the waste water from the softening process.

In alternative, the tank S may be emptied and filled again with the water from the main, with each emptying and filling cycle of the tank P; in this instance the quantity of water supplied every time to the tank S will be less compared to the example previously described, but capable of receiving the substances removed from the fluid contained in the tank P, without any excessive concentration or precipitations.

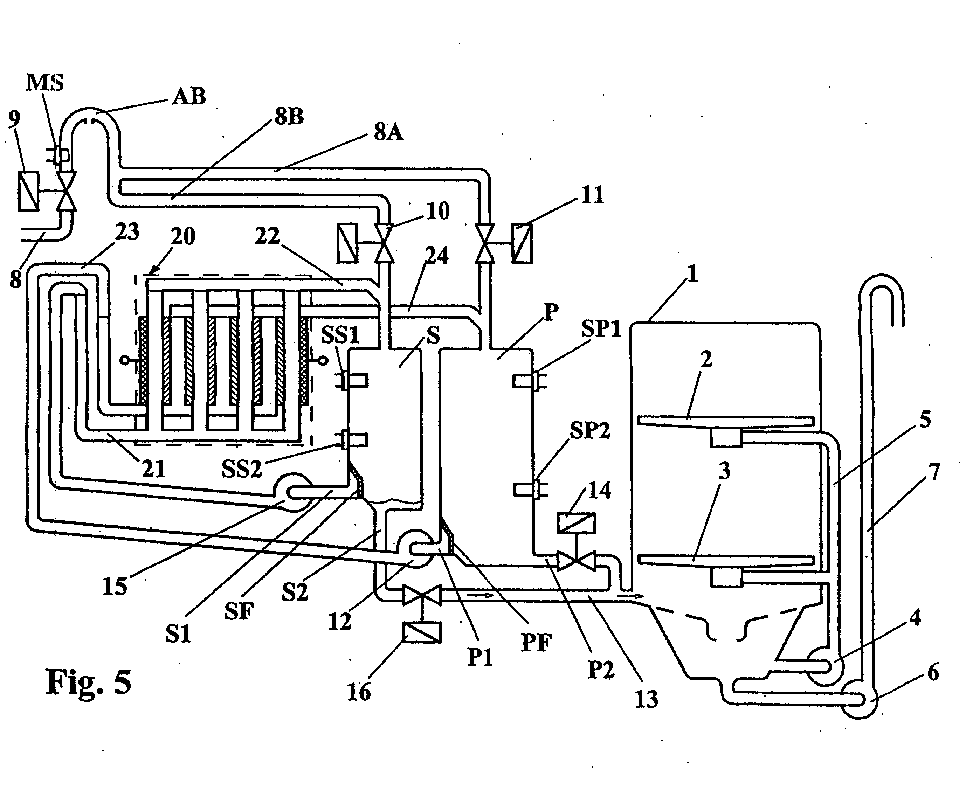

The water contained in the tank S, and used in the softening processes occurring during the various water supplies from the water main, can be discharged from the machine at the end of the wash cycle. According to this embodiment, the control system of the machine is programmed for instructing the opening of the valve 16 after the discharge following the last step provided by the wash cycle; so the contents of the tank S can flow through the duct 13 to the tub 1 as illustrated in Fig. 5 and be discharged through the discharge pump 6.

A further advantageous embodiment of the invention, on the other hand, the water contained in the tank S may be maintained inside the tank itself or inside the washing tub at the end of a wash cycle, for its further use during a subsequent utilization of the apparatus or a step of the subsequent wash cycle.

According to this embodiment, the contents of the tank S may actually be utilized for executing determined steps provided by a wash cycle, provided these steps can accept water with a high hardness degree, such as cycle steps executed with cold water or water having a lower temperature compared to the threshold of limestone precipitation (typically, the limestone contained in the water does not precipitate at temperatures below about 57°C). The following is an example of this application.

It is assumed to be at the start of a subsequent utilization of the apparatus, i.e. at the start of a wash cycle, with the tank P being empty and the tank S filled with water, as previously described (i.e. water used in the previous wash cycle for a softening process, and having an increased contents of ions or anyway waste substances).

After starting a wash cycle, the control system of the machine opens the valve 16; the contents of the tank S is conveyed to the washing tub 1 for executing the first cold wash step, As said, this first step or pre-wash, can be executed using the water contained in the tank S in spite of its high concentration of dissolved calcium and magnesium salts from the softening process previously described; this considering, as said, that,
- this pre-wash step is executed with cold water,
- limestone precipitates only above a certain fluid temperature threshold,
- pre-wash steps are substantially provided for removing most of the soil on the crockery mainly mechanically way through the action of the water jets.

Once the tank S has been discharged, the valve 16 will close and the machine execute the cold pre-wash step (should more water in the tub be eventually required, it may be supplied directly from the water main).

The control system of the machine activates the opening of the valves 9, 10 and 11 simultaneously with the execution of this pre-wash step, to let fresh water flow to the tanks P and S; once the required quantity of water has been supplied to these tanks and the above valves have been closed, the control system of the machine activates the pumps 12 and 15 as well as voltage supply between the electrodes 20B and 20C for water softening, as previously described.

Once the pre-wash step is over, the fluid in the washing tub 1 will be discharged through the pump 6; subsequently, considering that also the softening process or water treatment in the tank P is over, the water contained in that tank will be conveyed to the washing tub for the second step of the wash cycle, whereas the water contained in the tank S is kept for subsequent softening cycles.

The wash cycle will go on according to the procedures previously described and reach its starting condition again at the end, i.e. with the tank P empty and the tank S full, where the contents of the latter can be utilized for a subsequent operation of the apparatus, i.e. for a subsequent wash cycle.

As it will be noticed, according to the suggested embodiment, also the water enriched with ions or anyway waste matter, such as calcium and magnesium cations from the softening process is not discarded; on the contrary, it can be advantageously utilized for the execution of a step in a subsequent wash cycle.

A possible re-use of the waste water from the tank S is also due to a relatively low ions concentration of the fluid, in particular compared to the concentration of the water discharge of commonly known ions exchange softeners, which utilize a water and sodium chloride solution, or brine for resins regeneration.

By way of non limiting example, considering a treatment of water with a hardness of 140 French degrees and a ratio of about 1:3 from the water contained in the tank S to the water contained in the tank P, respectively, the maximum concentration of the waste product according to the invention is in the order of a few thousands p.p.m. (parts per million) of solids dissolved for total.

In the instance of classic brine, vice-versa, concentration is in the order of a few hundreds of thousands p.p.m. (e.g. 10% brine → 100.000 p.p.m; minimum value for resins regeneration); even considering a subsequent dilution of about 0,2 litres of regenerating brine in as many 1,5 - 2 litres wash water of the resins, concentration of the waste water would anyway be of a few tents of thousands p.p.m..

However, in a further possible embodiment, nothing will hinder using the contents of the tank S for executing an operative step of the same cycle in which the ions enriched water, of which the tank S, has been produced.

A wash cycle is assumed by way of example, in which the last two steps consist of a cold rinse and a hot rinse.

In this instance, before starting the above cold rinse, the tank S is full and the tank P is empty; the control system of the machine provides to execute a water intake from the water main for filling the tank P according to the above procedures; subsequently, the water contained in the tank P will be softened through the decalcifier 20, as previously described Once the softening process is ended, the contents of the tank S can be conveyed to the tub 1 for executing the cold rinse step, which will end with the discharge of the rinse fluid in the sewage system through the pump 6 and hose 7; following this discharge, the water contained in the tank P will be conveyed to the tub 1 where it is heated for the hot rinse step, also ending with the relevant discharge of the rinse fluid in the sewage system. Therefore, also in this instance the water contained in the tank S can be used for executing a wash cycle step without being wasted, and at cycle end both the tanks P and S will be empty.

Alternatively, in the above example, the contents of the tank S may be conveyed immediately to the tub 1, supplying both the tank P and tank S with fresh water from the main; thus, the above cold rinse step can be executed simultaneously with the softening operations, saving time.

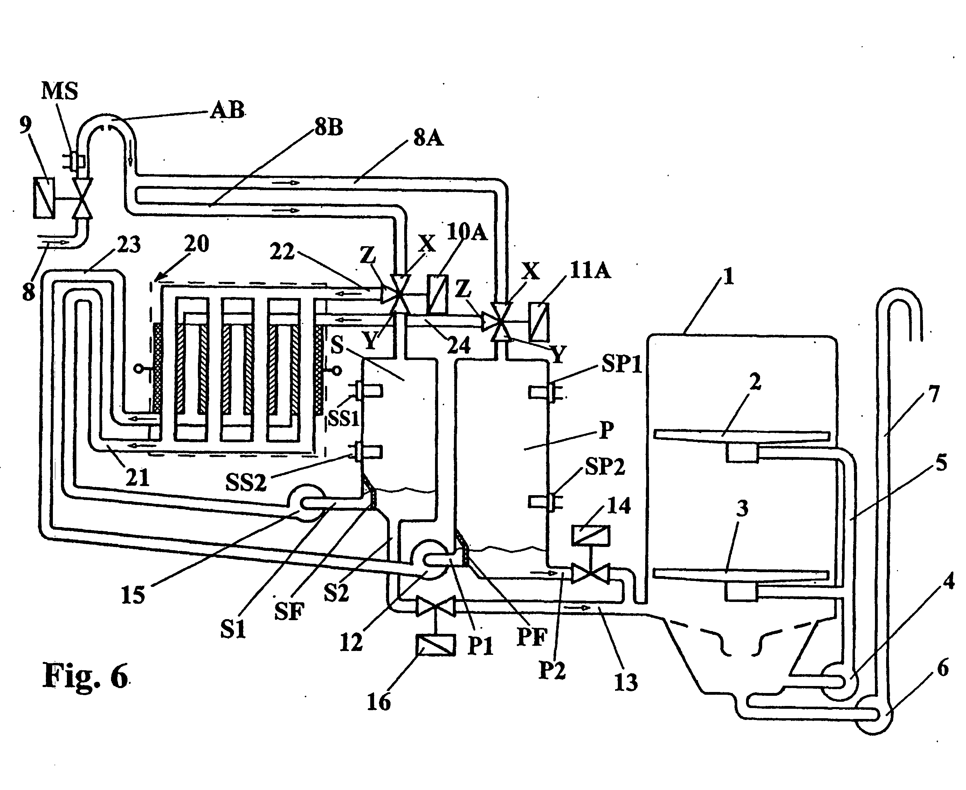

Fig. 6 shows schematically a possible embodiment of the present invention; in this figure the same reference numbers of the previous figures are used for indicating technical equivalent elements.

In the embodiment of Fig. 6, the valves 10 and 11 of the previous figures are replaced by three-way valves or deviators 10A and 11A, each one of them with:
- a first way X, connected to the relevant duct 8B or 8A, acting as the valve inlet;
- a second way Y, connected to the relevant tank inlet S or P, acting as the valve outlet;
- a third way Z, connected to the relevant outlet duct 22 or 24 of the decalcifier 20, acting alternatively as the valve inlet or outlet, as further described.

Moreover, in the example of Fig. 6 the pumps 12 and 15 have not a tight sealed impeller (as usual in the instance of some discharge pumps for washing machines).

Operation of the machine schematically illustrated in Fig. 6 is as follows.

When supplying the water from the main, the control system causes the valve 9 to open, whereas both valves 10A and 11A are controlled for their inlet water from the relevant X way flow out through the Y way only.

Thus, water can reach the tanks S and P, which are filled with water for the purposes described above, i.e.
- softening process through the decalcifier 20, with water ricirculation through the pumps 12 and 15;
- use of the softened water in the tank P for the execution of the relevant wash cycle steps;
- direct discharge of the water with incremented hardness from the tank S in the sewage system, or its use for executing at least a wash cycle step.

In the suggested embodiment, the control system of the machine is programmed for obtaining a counter-current wash both of the electrolytic cell forming the decalcifier 20 and of the filters SF and/or PF.

Accordingly, at a time when both the tanks P and S are empty, the control system of the machine will provide to:
- open the valve 9;
- control the valves 10A and 11 A for their inlet water from the relevant X way flow out through the relevant Z way only;
- eventually open the valves 16 and 14 (water may remain in the tanks for subsequent steps).

Thus, the inlet water flow can reach inside the decalcifier 20 through its outlet ducts 22 or 24 and flow counter-current in the various channels CE1, CE2, CC and CP; water can then flow out of the decalcifier through its inlet ducts 21 and 23, flow in the pumps 15 and 12, then reach the tanks S and P, hitting the filters FS and FP counter-current; due to the valves 14 and 16 being open, the water containing likely impurities to be removed counter-current from the filters FS and FP can further reach the washing tub 1 for discharge from it through the pump 6.

Dosage of the water used for the above counter-current washing of the decalcifier 20 and filters FS and FP can be timed (opening the valves 9, 10A, 11A, 14 and 16 for a preset time) or using a common turbine flow-meter; at any rate, this quantity of water is a small one and the above counter-current washing will take place with small frequency to avoid that the likely impurities contained in the water from the main may cause any risks for the system (e.g. the counter-current washing may be executed once each wash cycle or once every "n" wash cycles of the machine).

Moreover, in a further possible embodiment, the pumps 12 and 15 may also be directional pumps, i.e. with the motor capable of inverting the rotary direction of the relevant impeller; in this event, by the opportunity of the above counter-current wash step the control system will operate the pumps with a rotary direction opposite to the direction for water circulation during softening.

On the other hand, a self-cleaning pre-filtering system for the water supply from the main (such as mechanical, magnetic or electro-magnetic), may be advantageously provided instead of or in addition to the filters PF and/or SF, upstream the tanks P and S.

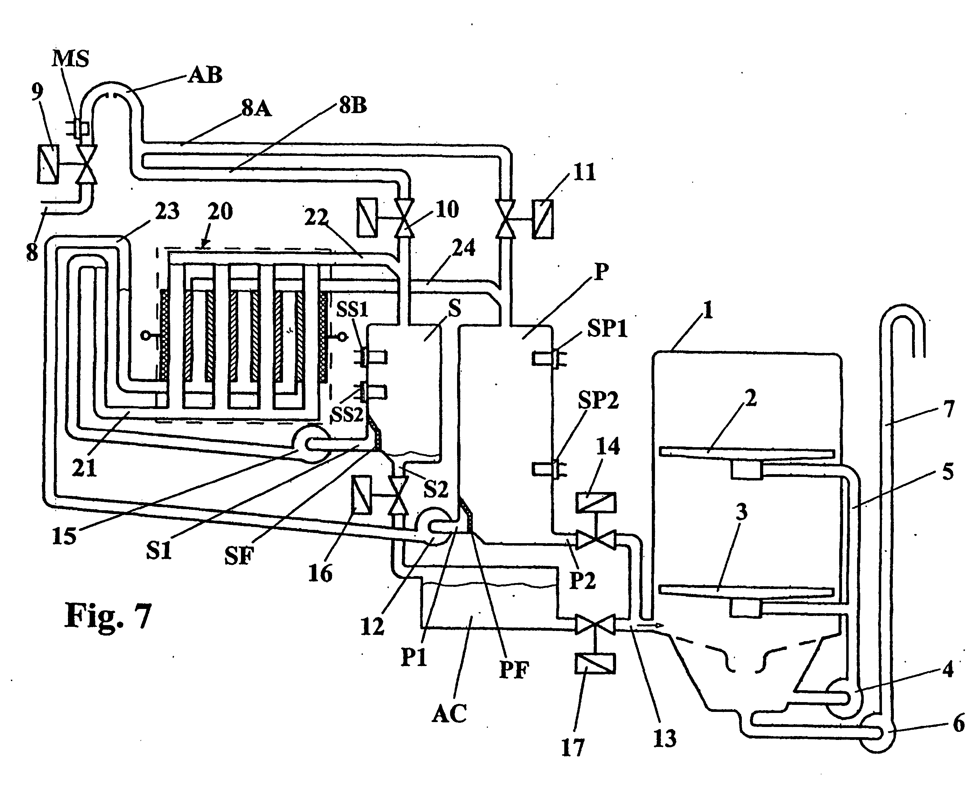

Fig. 7 shows schematically another possible embodiment of the present invention; it should be noticed that also in this figure the reference numbers of Figures 1-5 are used for indicating technical equivalent elements.

The embodiment of Fig. 7 provides a collecting tank AC upstream the valve 16, having an outlet communicating with the water inlet duct 13 to the tub 1; a solenoid valve 17 of common type and operation is provided on this outlet of the tank AC, controlled by the control system of the machine.

In main line, operation of the machine illustrated in Fig. 7 is alike the one previously described with reference to the Figures 1-5; the only difference being that when emptying the tank S, the water contained in it is not discharged directly in the tub, but is collected in the tank AC; therefore, in main line, in opening condition of the valve 16, the valve 17 will remain closed.

The tank AC may be provided for instance in those cases where the maximum quantity of water that can be contained in the tank S is not enough for executing a wash cycle step. By way of a specific example, it is assumed to have both tanks S and P empty at the end of a wash cycle, whereas the tank AC is full.

At the beginning of the following wash cycle, the tanks P and S are filled with new water according to the procedures previously described; therefore, the water supplied from time to time in the tank P is softened and is used for executing the various wash steps, whereas the water initially supplied to the tank S is used for softening the water utilized in the course of such steps.

Before the last cold rinse of the cycle, the tank S will be full, the tank AC will be full and the tank P empty.

Now, the control system of the machine can open the valves 16 and 17: both the water contained in the tank AC and in the tank S can be discharged in the tub so as to have a sufficient quantity of water for executing the cold rinse step.

During execution of the cold rinse, the control system will provide for a new filling of the tanks P and S, and softening of the water contained in the tank P. When the cold rinse and said softening are over, the contents of the tank S is discharged in the tank AC, which is filled again; the contents of the tank P, vice-versa, is discharged in the tub 1 for the final hot rinse step. Therefore, at cycle end the program is back to its starting conditions, i.e. empty tanks P and S and full tank AC.

Obviously, the above description relates to an application example of the storing tank AC; it is clear for the man skilled in the art that other operating and capacity combinations are possible to the tanks S and AC.

As previously described, in a preferred embodiment, the quantity of water to be supplied to the tank S is calculated depending on the hardness degree of the water main, measured by the special means MS and/or SP2 and/or SS2; in other words, greater is the hardness degree of the water from the main supplied by the duct 8, the quantity of water supplied to tank S will be greater.

This approach is useful also in the event of a very hard water supply from the main, in order to avoid a concentration excess of calcium and magnesium cations in the water of the tank S. In other terms, greater is the hardness of the water from the main, the quantity of calcium and magnesium cations released by the water of the tank P to the water of the tank S following subsequent softening processes, will be greater.

This progressive concentration increase of the calcium and magnesium cations may cause the "saturation" of the water in the tank S, i.e. a capacity loss of the water to receive further cations leading to calcareous formation and making further softening processes useless after the "saturation" has been reached.

Therefore, in this frame, the quantity of water to be filled in the tank S will be established by the control system of the machine, right in order to avoid the above "saturation" following the softening processes to be made using that water.

For the same reason it is also clear how the solution comprising calculation of the quantity of water to be filled in the tank S depending on the hardness degree of the water main is useful also in order to avoid an excessive water waste, when its initial hardness is relatively low.

Therefore, from the above it can be guessed how the quantity of water that can be filled in the tank S is not a fixed one, but may be variable; in this frame, the provision of a storing tank like the one previously indicated with AC can be quite useful, right for the evens where the quantity of water filled in the tank S is not enough for the execution of a wash cycle step.

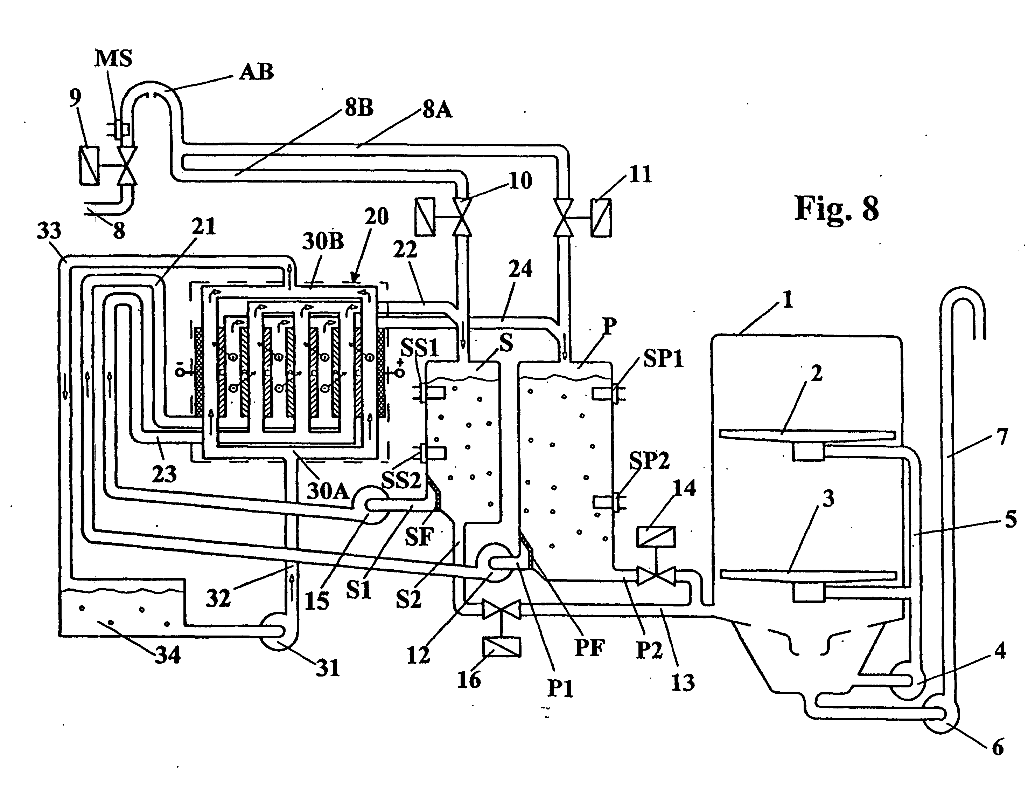

Fig. 8 is illustrating a further possible embodiment of the present invention, according to which an independent circulation circuit is provided for a wash solution of the electrodes 20B and 20C of the decalcifier 20, in particular a closed circuit not requiring a supply from the water main; also in this figure the reference numbers of the previous figures are used for indicating technical equivalent elements.

In the embodiment represented in this figure, the channels of the electrodes CE1 and CE2 are connected to each other in parallel and separately with respect to the channel CC, by means of an inlet header 30A and an outlet header 30B.

Reference 31 indicates a pump like the ones previously indicated with 12 and 15, delivery of which is in communication with the header 30A through a duct 32; the suction branch of the pump 31, vice-versa, is connected to the outlet header 30B through a duct 33; a tank 34 can be provided along the duct 33.

According to the suggested implementation, the above closed circuit consisting of the channels CE1 and CE2, ducts 32 and 33, headers 30A and 30B, and pump 31, is provided for circulating a washing fluid of the electrodes in the channels CE1 and CE2, e.g. water. Moreover, in the embodiment represented in Fig. 8, the decalcifier 20 provides cationic membranes in line with both the electrodes channels; in other terms, the decalcifier 20 of Fig. 8 is delimiting:
- two channels of the electrodes CE1 and CE2, extending substantially from the anode 20B and a cations permeable membrane to the cathode 20C and from the cathode 20C and a cations permeable membrane, respectively (in the previous figures, both electrodes channels CE1 and CE2 are extending on the contrary from the anode 20B and an anionic membrane 20D and from the cathode 20C and a cationic membrane 20E, respectively);
- at least a "concentrate channel" CC, delimited by a membrane 20E and a membrane 20D; in the represented example three channels CC are provided;
- at least to "purifying channels", indicated with CP, extending from a membrane 20D and a membrane 20E; in the represented example, three channels CP are provided.

In the suggested implementation, the softening process occurs substantially with the same procedures previously described, but adding activation of the pump 31, which causes circulation of the above wash fluid of the electrodes 20B and 20C in the relevant closed circuit.

Thus, during the softening process, some calcium and magnesium cations migrate in the channel CE2, representing the negative electrode, from the adjacent channel CP, going through the cationic membrane separating said channels from each other; thus, the wash fluid is enriched with these cations.

Subsequently, during circulation of this fluid through the pump 31, the calcium and magnesium cations themselves will reach the channel CE1, representing the positive electrode; as a result, the cations themselves will be induced to migrate, due to the electrolytic effect, in the channel CC adjacent to the channel CE1, going through the cationic membrane separating said channels from each other; thus, the above calcium and magnesium cations are removed from the wash fluid of the electrodes, which flow in the water of the tank S ricirculated by the pump 15.

Therefore, the above solution prevents an excessive concentration of calcium and magnesium cations in the closed circuit of the electrodes wash fluid, without requiring a replacement of that fluid; as a result, also the quantity of water in the circuit of the tank S can be smaller compared to the embodiments of the Figures 1-7.

In a further implementation, the cationic membranes in line with the electrodes channels CE1 and CE2 are preferably selective type to the monovalent ions, i.e. apt to hinder bivalent ions such as calcium and magnesium to go by to said electrodes channels; thus, in spite of power conduction being slightly affected, the risk of said bivalent ions (calcium, magnesium, etc.) depositing inside the electrodes channels is further avoided.

However, these monovalent cationic membranes allow circulation of ions, such as hydrogen ions, sodium ions, etc., warranting a suitable power circulation between the electrodes CE1 and CE2.

According to the implementation of Fig. 8, a system can be advantageously provided for a likely periodic topping up and/or replacement of the electrodes wash fluid in the closed circuit, since a small portion of it goes lost due to gas formation (hydrogen, oxygen, etc.) on the electrodes, due to the electrolytic process; this top-up and/or replacement system is preferably of automatic type, and according to procedures being clear for the man skilled in the art; for instance an hydraulic circuit (not represented) like the circuits 8B, 10 or 8A, 11 may be provided, being apt for water intake from the line 8 to the tank 34.

The control system SCE controling the softening system is preferably an electronic type, based on the use of a microprocessor or micro-controller, and fitted with appropriate memory means being apt to store the operation program of the system itself and the relevant operating parameters. On the other hand, nothing will hinder implementing the invention with an electromechanical or hybrid control system type (i.e. partly electromechanical and partly electronic).

As previously mentioned, the control system of the machine described in the figures is preferably apt to establish the hardness of the water from the water main arriving from the duct 8, in order to decide whether to perform the softening process or supply the water from the main directly to the tub 1, without treating it through the decalcifier 20.

As already mentioned above, the control system is also preferably programmed for calculating the quantity of water required for optimal operation of the decalcifier 20 based on the measured hardness of the water from the main and its proportional supply to the circuit of the tank S, without excessive wastage and saturation risks. However, nothing will hinder supplying the tank S with a fixed quantity of water (such to fill the tank S completely), the contents of which is no longer discharged at every utilization of the dishwashing machine, but only when salts concentration in the water pertaining to the tank

S becomes excessive (i.e. after repeated cycles of the dishwasher).

The last functional feature may be advantageous when a slight hard water from the main (e.g. 10 °F) has to be treated and the minimum quantity of water actually required for the channels CC and eventually CE1 and CE2 (Figs. 1-7) of the decalcifier 20 is smaller. In this operating condition, i.e. slightly hard water, the minimum quantity of water required for filling the hydraulic circuit alone consisting of pump, hoses and decalcifier 20 (with minimum level in the tank S), may be by far higher than the quantity actually required for softening just one operating cycle of the household apparatus; in this situation, in fact, concentration of the ions transferred from the circuit of the tank P to the water of the tank S will be clearly lower than the saturation and/or precipitation threshold.

Both systems (proportional or fixed water supply) can in any case co-exist, under the management of the control system SCE, duly programmed to that purpose. In such an instance, the control system may e.g. provide for automatic selection of:
- a first operating procedure, for "slightly hard" water from the main, with a filled tank S, but utilized for several actuations of the dishwashing machine, or
- a second operating procedure, for "medium/very hard" water, with the tank S filled proportionally to the water hardness of the water main and discharged at any utilization of the machine.

As to power supply of the electrodes 20B and 20B, the control system of the machine is preferably programmed for utilizing predetermined voltage and/or current values, in particular in order to avoid damaging risks of the membranes inside the decalcifier 20 over the whole operating field, both for very high hardness (e.g. over 140 °F) and low hardness (e.g. 10 °F).

To this purpose, the control system can use a constant voltage or current feeder set on one preset value, e.g. calculated on the minimum hardness value according to known formulae, being anyway apt to warrant the above operation all over the hardness field.

In another embodiment, the control circuit may change the voltage and/or electric current to the electrodes proportionally to the hardness and/or conductivity of the water of the tanks P and/or S, by changing it either continuously, or by preset steps, during the whole softening process; in this instance the use of predetermined data tables may be provided (e.g. hardness/current links), contained in special non volatile memories and elaborated by a microprocessor or micro-controller circuit controlling and changing also the supplying circuit of the electrodes 20B and 20C.

Preferably, the control system is programmed in any case to avoid circulation of a current exceeding a first preset upper limit in the decalcifier 20 (referred to the maximum current per square meter or measurement unit of a ion exchange membrane), in particular when the decalcifier itself is starting softening operations and both the hardness and electric conductivity values are high.

The control system is also preferably apt to avoid circulation of a current exceeding a second preset lower limit in the decalcifier 20 (e.g. depending on the decalcifier type and/or operating parameters), in particular when the decalcifier is at the end of the softening operations and the hardness has reached the desired value.

The control system may also be programmed for diversifying the supply procedures of the electrodes 20B and 20C within one same softening process; according to an advantageous embodiment, for instance, the control system can provide a first supply procedure for a first treatment step, and a second supply procedure for a second treatment step, in order to avoid a precipitation risk of the compounds determining water hardness and/or a damaging risk of the membranes.

By way of example, in the first step of the softening process the electrodes 20B and 20C are supplied with a first voltage (e.g. 20 Vdv or DV) corresponding to a first high current (e.g. over 2A or Ampere), up to a preset conductivity value (e.g. 700 ∝S or microSiemens); now, the electrodes 20B and 20C are supplied with a second voltage, lower of the previous (e.g. 14Vdc), corresponding to a second lower current (e.g. about 0,5 A).

The above increase of the initial voltage and/or current value is also intended to speed up water treatment, in particular in case of a high water hardness; this feature allows a reduction or anyway not to affect negatively the total cycle time of the washing machine. It should be noticed how the performances and water treatment times in the decalcifier 20 considerably depend on the size of the latter (i.e. on the total area of its membranes), which must be considerably limited for cost reasons. In main line, a way for improving the performance of the decalcifier 20 would be to increase the circulating electric current; however, to avoid damaging risks to the membranes, certain limits cannot be exceed as explained above.

On the other hand, another parameter substantially affecting a possible increase of the above current is the water flow-rate circulating in the decalcifier 20; in other terms, the higher the flow-rate, the greater the electric current that may be circulated between the electrodes 20B and 20C, without risks.

Back to the previous example, the limit current of 0,5 A may be established for a precise conductivity value and a precise flow-rate value; however, the flow-rate is bound to the features of the circulation pumps and structure of the decalcifier 20, which should preferably warrant an appropriate through section to avoid introducing load losses in the system. The decalcifier 20, on the other hand, should preferably have channels (CP,CC) very thin (e.g. 0,6 to 1,2 mm at the most) between a membrane and the other, in order to warrant a good current flow, without exceeding in electric voltage (in view of the specification limits for household apparatuses).

Therefore, the above control values must be established based on the hydraulic features of the system, in particular of the circulation pumps and likely loss charges introduced by the structure of the decalcifier 20.

Therefore, the regulation of the voltage or electric current supplied to the electrodes 20B and 20C may be performed depending on the water flow-rate to the channels CE1, CE2 and CC, on one hand, and on the water flow-rate to the channels CP, on the other; however, nothing will hinder providing regulating means of the water flow-rates (e.g. variable flow-rate pumps or proportional valves), keeping constant the value of the supply voltage to the electrodes 20B and 20C.

Also in this instance, changing the flow-rate in the hydraulic system of the softening system is performed by the control system, according to measured and/or preset and/or calculated parameters, for operation optimisation.

Finally, the control system according to the invention is preferably programmed to periodically realize a polarity reversal of the electrodes provided in the electrolytic cell of the decalcifier 20, as an automatic cleaning means of the membranes for removing any deposits.

In a possible embodiment, said polarity reversal may occur for a fixed time at the end of each softening process (e.g. equalling 10% of the total treatment time); in these conditions the water is softened and cleaned in the channels CP where the membrane surfaces may become encrusted, whereas in the ducts CE1, CE2 and CC the water has an enriched contents of calcium and magnesium cations.

Other operating procedures may also be provided, such as more polarity reversals during the whole softening process, according to fixed or variable times based on continuous hardness measurements of the water from the main, of the water pertaining to the tank S and of the water pertaining to the tank P, said measurements being performed through the means MS, SS2 and SP2.

With reference to the above polarity reversal of the electrodes 20B and 20C, the softening system may also be conceived for alternating the functions of the tanks S and P.

As previously noticed, the tank P is provided in normal conditions for containing the water to be softened and the tank S for the waste water of the softening process; however, according to the suggested implementation, the above polarity reversal of the electrodes can be provided not just for a portion alone of a softening process, but rather for its whole duration.

According to this preferred embodiment for application of the invention, a few examples previously illustrated are included and linked separately for simplicity's sake, adding also a reversal of the hydraulic circuits and/or relevant functions to the above polarity reversal.

According to the suggested embodiment, a softening process as previously described, with the electrode 20B representing the anode, the electrode 20C the cathode, the tank P collects the water to be softened and the tank S collects the water in which the cations of the water of the tank P are migrating, will be followed by a softening process with reversed polarity and reversed chambers CC e CP, where the electrode 20B is the cathode, the electrode 20C the anode, the tank S collects the water to be softened and the tank P collects the water in which the cations of the water of the tank S are migrating.

In this process, after filling the tanks P and S and a subsequent "decanting" time, the control system of the machine activates the pumps 12 and 15.

Thus, the water in the tank P will flow through the duct 23 in the channels CP of the decalcifier 20 and since the valve 11 is closed, back to the tank P through the duct 24; the same applies for the water in the tank S, which will flow through the duct 21 in the channels of the electrodes CE1 and CE2 and in the channels CC of the decalcifier 20 and since the valve 10 is closed, back to the tank S through the duct 22.

Simultaneously to the activation of the pumps 12 and 15, the control system SCE of the machine will supply direct voltage between the electrode 20B presently acting as the cathode and the electrode 20C presently acting as the anode.

Thus, the electric current through the decalcifier 20 induces the migration of the calcium and magnesium cations, of the water flowing in the channels CC, to the electrode 20B, through the cations permeable membranes 20E; vice-versa, the anions will migrate by virtue of the electric current to the electrode 20C through the anions permeable membranes 20D.

Therefore, the cations permeable membranes 20E hinder the anions from migrating to the electrode 20C and the anions permeable membranes 20D hinder the cations from migrating to the electrode 20B. This process will lead to a gradual reduction of the cations concentration inside the channels CC; in particular, for the purposes of the present invention, the calcium and magnesium cations in the channels CC are gradually transferred in the channels CP and in the channel CE1 of the electrode 20B.

As it will be noticed, also in this instance the electrochemical softening process or by electro-dialysis is obtained with water ricirculation inside the decalcifier 20, so as to cause a gradual hardness reduction of the water contained in the tank S, flowing in the channels

CC, CE1 and CE2 and, conversely, cause a progressive hardness increase of the water contained in the tank P flowing in the channels CP.

At the end of the above softening process, the control system of the machine will open the valve 16.

So that, the water contained in the tank S can flow through the duct 13 to the tub 1 of the machine. The washing of the crockery is then executed with that water according to common procedures through the pump 4, circuit 5 and spraying arms 2 and 3; then the wash fluid is discharged from the tub 1 activating the pump 6.

Once discharge is over, the control system of the machine provides for a new water intake from the water main for executing the second wash cycle step. The waste water in the tank P can be utilized for new softening processes, or discharged in the sewage system or used for wash steps where the use of water with enriched contents of calcium and magnesium is acceptable, as previously described.

In the embodiment suggested, the removal of the deposits or scaling is favoured by the fact that the flow of the ions and/or electric current reversal occurs for an extended time, for the whole time of the softening cycle rather than for a fraction of it,

but also the fact that in the chambers with the above deposits, which correspond to the channels with circulation of salt enriched water, in the subsequent cycle will be flow the water to be softened, which is more "cleaner" and suitable to facilitate the "dissolution" or migration of the deposits.

It is clear, in this frame, that the operating cycle sequence of the decalcifier 20 with normal and reversed polarity will be established depending on the wash cycle steps to be executed; the same applies for the capacity of the tanks P and S.

By way of non limiting example, in a first operating cycle of the machine, the tank P will contain the water to be softened, whereas the tank S will contain the water being apt to receive the ions extracted from the circuit of the tank P; in a second operating cycle of the machine, the tank S will contain the water to be softened and the tank P the water being apt to receive the ions extracted from the circuit of the tank S, and so on alternating the above cycles.

The control system is also apt to store appropriate data related to the last cycle executed, such as the direction of the electric polarity and/or definition of the tank containing the softened water, so that the operating conditions may be reversed in a subsequent wash cycle, days later or after extended periods of time.

Finally, it should be noticed how the cell 20 according to the invention besides its softening capability, i.e. removing the calcium and magnesium ions causing water hardness, also has a deionising capacity to purify the fluid treated by all the ions contained in the solution, such as sodium, potassium, chlorides, nitrates, etc.

Evaluation of the amount of ions in a solution is provided by conductivity, through which all the ions in the solution can be measured. For instance, waters with the same hardness can have different conductivity values between them; i.e. a water with a hardness of 100°F and no sodium can have a conductivity of 2 mS ; another water with a hardness of 100 °F and rich of sodium will have a conductivity of 3 mS (i.e. a difference of one mS due to the sodium in the solution). Therefore, it is obvious how conductivity (intended as the amount of ions) is directly affecting the electric current flowing through the cell 20: the higher the quantity of ions, the higher the amount of electric current flowing between the electrodes, with equal potential difference or voltage applied.

Therefore, it is also clear how the times and/or values of the voltage supplied to the electrodes CE1 and CE2, as required for reaching a satisfactory preset softening value, to which the water is considered softened enough, may be different according to the initial conductivity degree of the water to be treated.

From the above description the features of the present invention are clear and also its advantages will be clear.

Obviously many other changes are possible for the man skilled in the art to the household apparatus utilizing a fluid, comprising a purifying system in which a substance must be removed from said fluid, in particular a water softening system previously described by way of example, without departing from the novelty principles of the innovative idea.

For instance, dosage of the water for crockery washing to be introduced in the tub 1 can be theoretically obtained through a set of sequential filling and discharge operations of the tank P or S, in which case the capacity of the tank may equal a fraction or portion of the total amount of water required for executing a wash step in the tub.

According to an advantageous embodiment of the invention, the above water filling and softening systems or a portion of them, may be all or partly integrated in one device; for instance, in this frame, the air-break AB, the tanks S and P, the likely tanks AC and/or 31, the decalcifier 20, and the various valves and pumps described above, along with their relevant associated elements (sensors, ducts, and so on) may be integrated in one or more units, e.g. made from thermoplastic material, and assembled inside the machine cabinet on at least one side of the tub 1.

The previous means indicated with 12 and 15 may consist of two single pumps, but nothing will hinder the use of a single common pump with two impellers; analogous considerations obviously also apply for the embodiment of Fig. 8, where the means 12, 15 and 31 may consist of one single pump with three impellers.

A further implementation would be the electrolytic cell 20 fitted with gas sucking and/or collecting means (i.e. hydrogen and oxygen) for subsequent utilization (such as disinfection, blanching, etc.) and/or appropriate discharge or abatement.

According to a further implementation, water filling of one of the tanks S and/or P may eventually be obtained by overflowing the other tank with obvious procedures for the man skilled in the art.

In the embodiment of Fig. 8, the wash fluid of the electrodes 20B and 20C may consist of a solution comprising most soluble anion salts; therefore, in this frame, a nitrates aqueous solution would be advantageous (such as NaNO₃, KNO₃, etc.) for ensuring a good conductivity of the solution circulating over the electrodes, avoiding a chemical combination (e.g. precipitation) with the cations extracted from the water.

Another possible embodiment of the invention provides the use of ions exchange softening resins, in particular cationic resins, at least inside the channels CP of the decalcifier 20, for further improving the water softening process.

Obviously, in this case, for the reasons previously explained and following application of the above voltage and/or current between the electrodes 20B and 20C, the calcium and magnesium cations entrapped by these resins would be led to migrate in the channels CC and CE2, and provide for regeneration of the resin efficiency.

The membranes 20D and 20E may be replaced by appropriate anionic and cationic resin layers, respectively.

According to a further implementation, sensing means are provided being apt to detect the room temperature in proximity of the decalcifier 20, or directly of the water through the sensors MS and/or SS2 and/or SP2, in order to change the operating parameters of the decalcifier 20 depending on such temperature; in main line, in fact, the higher water temperature, the faster the softening process.

According to a further possible implementation, means are provided, such as an UV lamp not represented, being apt to disinfect the inlet water from the duct 8 and/or the water filled in the tanks P, S, 34, in particular in order to avoid such drawbacks as deposits on the membranes due to a bacterial action; in this frame, at least a portion of the ducts and/or tanks on which said UV lamp operates are manufactured from a suitable transparent material.

Continuous fluid circulation between the collecting means P and S and the ducts CP, CE1, CE2, CC of the cell 20 may be ensured by means of any common technique, i.e. not only with pumps, but e.g. also with Venturi systems type.

The purifying system according to the invention has been previously described with specific reference to water softening, but it is clear that this system may also find application for different treatments of the fluid used in a household apparatus; for instance, the system fitted with membranes of appropriate features may be utilized for separating the washing agents or soil from the water previously used for a washing.

## Claims

1. A household apparatus using a fluid, comprising a purifying or treatment system of the type in which at least a substance must be removed from at least a portion of said fluid, in particular a water softening system, said system comprising at least an electrochemical, electro-dialysis or electro-osmosis cell (20), with a positive electrode (20B) and a negative electrode (20C), and at least a permeable separation element,
**characterized in that**
it provides:
- a first type of separation element (20E), of the ion exchange element type, being permeable to at least a first substance to be removed from at least a portion of said fluid,
- a second type of separation element (20D), of the ion exchange type, not being permeable to said first substance and permeable to at least a second substance,
- a plurality of channels (CE1, CE2, CC, CP) delimited between said electrodes (20B, 20C) and/or said separation elements (20E, 20D),
- first collecting means (P) of a portion of said fluid from which said substance must be extracted or the fluid to be purified,
- second collecting means (S, AC) of a portion of said fluid provided to receive said first substance or the fluid to be contaminated,
- means (SP1, SP2, SS1, SS2) in association with at least said first and/or second collecting means (P, S, AC) for detecting the features of at least a part of the fluid,
- circulation means (12, 22, 23 15, 21, 24) for obtaining a substantially closed circuit and/or a continuous circulation of said fluid between said collecting means (P, S) and said channels (CE1, CE2, CC, CP) of said cell (20) for purifying at least a part of the fluid,
- controlling means (SCE) comprising at least one electronic controller, and receiving information from said means (SP1, SP2, SS1, SS2) for controlling at least said cell (20) and the fluid circulation until a preset purifying value of said fluid is reached.

2. A household apparatus according to claim 1, **characterized in that** said means (SP1, SP2, SS1,SS2) in association with at least said first and/or second collecting means (P, S, AC) for detecting the features of at least a part of the fluid, comprise:
- first sensing means (SP1, SP2) located in said first collecting means (P) for detecting the features of at least a part of the fluid, and/or
- second sensing means (SS1, SS2) located in said second collecting means (S, AC) for detecting the features of at least a part of the fluid.

3. A household apparatus according to claim 1, **characterized in that** the flow speed of the fluid in the said channels (CE1, CE2, CC, CP) is changed by the control means (SCE) based on measurements performed according to predetermined algorithms or data tables.

4. A household apparatus according to claim 1, **characterized in that** the said water softening system is all or partly integrated in one device in particular made of thermoplastic material.

5. A household apparatus according to claim 1, **characterized in that** said first collecting means (P) are hydraulically connected upstream to said cell (20), being apt to receive the fluid to be purified before its flowing in said cell (20), and /or said second collecting means (S) are hydraulically connected upstream to said cell (20), being apt to receive the fluid to be contaminated before its flowing in said cell (20).

6. A household apparatus according to claim 1, **characterized in that** it provides first dosing or measuring means (SP1) of the quantity or features of the fluid to be purified being supplied to said first collecting means (P), and/or it provides second dosing or measuring means (SS 1 ) of the quantity or features of said fluid to be contaminated being supplied to said second collecting means (S).

7. A household apparatus according to claims 1, **characterized in that** said channels (CE1,CE2,CC,CP) comprise:
- one or more first channels (CP), in which said fluid to be purified will flow, said first channels being delimited by a first type of separating element (20E) and a second type of separating element (20D);
- two or more second channels (CE1,CE2,CC), in which a fluid will flow, which are provided to receive said first substance to be removed from the fluid to be purified flowing in the first channels (CP), or fluid to be contaminated, each one of said second channels (CE1,CE2,CC) being delimited by a first type of separating element (20E) and a second type of separating element (20D), or extending between one of said electrodes (20B,20C) and one of said separating elements (20D,20E).

8. A household apparatus according to claim 1 or 7, **characterized in that** said first type of separating element (20E) is a cationic ion exchange membrane and/or said second type of separating element (20D) is an anionic ion exchange membrane.

9. A household apparatus according to claim 7 **characterized in that** said first collecting means (P) are hydraulically connected to said first channels (CP) and said second collecting means (S) are hydraulically connected to said second channels (CE1,CE2,CC).

10. A household apparatus according to the previous claim, **characterized in that** it provides first circulation means (12,23,24) for obtaining said continuous circulation of said fluid to be purified between said first collecting means (P) and said first channels (CP), and/or it provides second circulation means (15,21,22) for obtaining said continuous circulation of said fluid to be contaminated between said second collecting means (S) and said second and/or third channels (CE1,CE2,CC).

11. A household apparatus according to claim 10, **characterized in that** said control means (SCE) operate for activating said first circulating means (12,23,24) and/or said second circulation means (15,21,22) concurrently for the generation of said electric field between said electrodes (20B,20C).

12. A household apparatus according to claim 1, **characterized in that** said control means (SCE) operate for reversing periodically the polarity of said electrodes (20B,20C), in particular for reversing the functions of said first collecting means (P) and said second collecting means (S), so as to collect said fluid to be contaminated in said first collecting means (P) and collect said fluid to be purified in said second collecting means (s), and that the fluid to be contaminated is circulated in said first channels (CP) and the fluid to be purified is circulated in said second channels (CE1,CE2,CC).

13. A household apparatus according to claim 4 or 12, **characterized in that** said control means (SCE) operate for changing the dosage of the amount of said fluid to be contaminated in the respective collecting means (P,S), depending on the initial contents of said first substance in the inlet fluid to the household apparatus.

14. A household apparatus according to at least one of the previous claims, **characterized in that** said control means (SCE) operate for controlling and maintaining the flow-rate of the fluid at a preset value in the course of said continuous circulation, and/or operate for changing the conditions and/or duration of said continuous circulation.

15. A household apparatus according to claims 1 to 13, **characterized in that** said control means operate for controlling and changing the flow-rate of the fluid during said continuous circulation, in particular according to preset or calculated values.

16. A household apparatus according to at least one of the previous claims, **characterized in that** it provides pre-treatment means (PF,SF,UV) of the fluid before its flowing in said cell (20), in particular filtering means (PF,SP) and/or decanting means, and/or disinfecting means of the fluid (UV).

17. A household apparatus according to claims 3 and 4, **characterized in that** said control means (SCE) operate for using the same fluid to be contaminated for a plurality of purifying processes, or for the treatment purposes of a plurality of amounts of fluid to be purified.

18. A household apparatus according to at least one of the previous claims, **characterized in that** said control means (SCE) operate for reversing the fluid flow in said cell (20) and/or obtaining a counter-current washing of said channels (CE1,CE2,CP,CC) and/or said electrodes (20B,20C) and said separating elements (20E,20D).

19. A household apparatus according to claim 1, **characterized in that** said control means (SCE) operate for changing the value of said voltage and/or electric current, and/or operate for changing the supply procedures of said electrodes (20B,20C) in the frame of one same purifying process.

20. A household apparatus according to at least one of the previous claims,
**characterized in that** it provides sensing means for detecting the room temperature in proximity of said cell (20) and/or of the fluid to be purified, in order to change the operating parameters of said cell (20).

21. A household apparatus according to at least one of the previous claims, **characterized in that** it provides sensing means (SP1,SP2,SS1,SS2) for detecting the features of said fluid, in particular its "quantitative" features, such as flow-rate, pressure, level, temperature, and/or its "qualitative" or chemical or electrochemical features, such as conductivity, hardness degree, acidity degree or pH.

22. A household apparatus according to claim 1, **characterized in that** it provides an additional and/or independent circulation circuit (30A,30B,31-34) for a washing solution or fluid of said electrodes (20B,20C) or of said channels (CE1, CE2).

23. A household apparatus according to the previous claim, **characterized in that** the second channels (CE1,CE2) extending between one of said electrodes (20B,20C) and one of said separating elements (20D,20E) are hydraulically connected to each other, in particular in parallel.

24. A household apparatus according to at least one of the previous claims, **characterized in that** the separating elements (20E, 20D), which delimit the second channels (CE1,CE2) comprising said electrodes (20B,20C) are of the same type, in particular of said first type and/or of the cationic type and/or selective to univalent ions.

25. A household apparatus according to at least one of the claims from 22 to 24, **characterized in that** it provides means for a likely topping up and/or replacement at regular intervals of said washing solution or fluid of said electrodes (20B,20C) or channels (CE1, CE2).

26. A household apparatus according to claim 1, **characterized in that** it provides means for changing the times and/or values of the electric voltage supply of said electrodes (CE1,CE2) depending on the conductivity degree of the fluid, in order to reach said preset purification value.

27. A household apparatus according to at least one of the previous claims, **characterized in that** said control means (SCE) operate for regulating the electric current circulating in said cell (20) and/or prevent an electric current exceeding a preset limit.

28. A household apparatus according to at least one of the previous claims, **characterized in that** said control means (SCE) are integrated with, or part of, or connected to the control system of the household apparatus.

29. A household apparatus according to at least one of the previous claims, **characterized in that** said control means (SCE) are programmed for actuating in a diversified manner said purification or treatment system depending on the operating cycles of the household apparatus, and/or are programmed for controlling the operation of all actuating means (4,6) or detecting means of the household apparatus.

30. A treatment or purification method of a fluid, realized in a household apparatus, of the type in which at least a substance must be removed from at least a portion of said fluid, in particular a water softening method, where is provided the use of an electrochemical, electro-dialysis or electro-osmosis cell (20), with a positive electrode (20B) and a negative electrode (20C), and at least a permeable separation element, and wherein is provided:
- a first type of separation element (20E), of the ion exchange element type, being permeable to at least a first substance to be removed from at least a portion of said fluid,
- a second type of separation element (20D), of the ion exchange type, not being permeable to said first substance and permeable to at least a second substance,
- a plurality of channels (CE1, CE2, CC, CP) delimited between said electrodes (20B, 20C) and/or said separation elements (20E, 20D),
- first collecting means (P) of a portion of said fluid from which said substance must be extracted or the fluid to be purified,
- second collecting means (S, AC) of a portion of said fluid provide to receive said first substance or the fluid to be contaminated,
- means (SP1, SP2, SS1, SS2) in association with at least said first and/or second collecting means (P, S, AC) for detecting the features of at least a part of the fluid,
- circulation means (12, 22, 23 15, 21, 24) for obtaining a substantially closed circuit and/or a continuous circulation of said fluid between said collecting means (P, S) and said channels (CE1, CE2, CC, CP) of said cell (20) for purifying at least a part of the fluid,
- controlling means (SCE) comprising at least one electronic controller, and receiving information from said means (SP1, SP2, SS1, SS2) for controlling at least said cell (20) and the fluid circulation until a preset purifying value of said fluid is reached.

31. A method according to claim 30, **characterized in that** said means (SP1, SP2, SS1, SS2) in association with at least said first and/or second collecting means (P, S, AC) for detecting the features of at least a part of the fluid, comprise:
- first sensing means (SP1, SP2) located in said first collecting means (P) for detecting the features of at least a part of the fluid, and/or
- second sensing means (SS1, SS2) located in said second collecting means (S, AC) for detecting the features of at least a part of the fluid.

32. A method according to claim 30, **characterized in that** it provides dosage and collection in a first container (P) of a first quantity of said fluid or fluid to be purified, from which said first substance must be extracted, and/or it provides dosage and collection in a second container (S) of a second quantity of said fluid or fluid to be contaminated, to which said first substance has to be added.

33. A method according to claim 30, **characterized in that** it provides detection of features or of the purification value of the fluid treated by said cell (20) and/or of the fluid supplied to said collecting means (P,S) and/or supplied to the cell (20) and/or of the inlet fluid to the household apparatus.

34. A method according to claim 30, **characterized in that** said fluid comes from a water main connected to the household apparatus, said fluid being in particular water.

35. A method according to claims 32 and 33, **characterized in that** said second quantity of fluid is calculated depending on the contents of said first substance in said inlet fluid to the household apparatus and/or in said fluid to be contaminated.

36. A method according to claim 30, **characterized in that** the fluid will not be purified should the contents of said first substance in said utilized fluid be lower than said preset purification value.

37. A method according to claim 32, **characterized in that** said fluid to be purified and said fluid to be contaminated are pre-treated and/or filtered and/or disinfected and/or decanted before flowing in said cell (20) or before the purification process.

38. A method according to claim 32, **characterized in that** said fluid to be purified is circulated in first channels (CP) of said cell (20) and said fluid to be contaminated is circulated in second channels (CE1,CE2,CC) of said cell (20), in particular said fluid flows through said channels (CE1,CE2,CC,CP) from the bottom upwards.

39. A method according to at least one of the previous claims, **characterized in that** the fluid flow-rate during said continuous circulation is constantly maintained at preset values and/or is changed.

40. A method according to at least one of the claims from 30 to 39, **characterized in that** the duration of said continuous circulation is variable according to preset or calculated values, in particular depending on the contents of said substance in said inlet fluid and/or said continuous circulation is performed for a preset period of time.

41. A method according to claim 30, **characterized in that** said preset purification value is variable in the frame of one same operation cycle of the household apparatus, in particular according to the function that said purified fluid has to perform during the cycle.

42. A method according to the claim 32, **characterized in that** the same fluid to be contaminated is used for a plurality of purification processes, i.e. for treatment purposes of a plurality of said first fluid quantities.

43. A method according to claim 32, **characterized in that** upon reaching said preset purification value, the purified fluid is conveyed to a tub of the household apparatus, in particular for executing hot wash steps.

44. A method according to claim 32, **characterized in that** the contaminated fluid is discharged from the household apparatus without being utilized by the latter or is utilized during an operation cycle of the household apparatus and/or is conveyed to a tub of the household apparatus, in particular for executing cold wash steps.

45. A method according to at least one of the previous claims, **characterized in that** it provides counter-current washing of said channels (CE1,CE2,CP,CC) and/or said electrodes (20B,20C).

46. A method according to the claim 30, **characterized in that** said voltage and/or current has a constant value or a variable value.

47. A method according to the claim 30, **characterized in that** the supply procedures of said electrodes (20B,20C) are changed in the frame of one same purification process.

48. A method according to the claim 30, **characterized in that** it provides polarity reversal of said electrodes (20B,20C) at regular intervals, in particular said polarity reversal occurs for a fixed time at the end of each single purification process.

49. A method according to the claim 48, **characterized in that** it provides more polarity reversals during one same purification process.

50. A method according to the claims 38 and 48, **characterized in that** it provides functions reversal of at least said first and second container (P,S), so as to collect said fluid to be contaminated in said first container (P) and collect said fluid to be purified in said second container (S), and that the fluid to be contaminated is circulated in said first channels (CP) and the fluid to be purified is circulated in said second channels (CE1,CE2,CC).

51. A method according to the claim 30, **characterized in that** the times and/or the values of the electric supply voltage of said electrodes (CE1,CE2) are variable depending on the conductivity degree of the fluid, in order to reach said preset purification value.

52. A method according to at least one of the previous claims, **characterized in that** it provides suction of the gases produced inside said cell (20)

53. A method according to the claim 48, **characterized in that** it provides detection of the room temperature in proximity of said cell (20) and/or of the fluid to be purified, in order to change the operation parameters of said cell (20).

54. A household apparatus, according to one or more of the previous claims from 1 to 29, **characterized by** comprising a control system.

55. A household apparatus, according to the previous claim, **characterized in that** said control system comprises at least a microprocessor or a micro-controller and appropriate memory means, said means provided in particular for containing data tables and/or elaboration programs for detecting and/or calculating measurement values or reference limits and/or to operate the appropriate system actuators.

56. A treatment or purification system of a fluid, suitable to be used with or to be adapted to a household apparatus, of the type in which at least a substance must be removed from at least a portion of said fluid, in particular a water softening system, said system comprising at least an electrochemical, electro-dialysis or electro-osmosis cell (20), with a positive electrode (20B) and a negative electrode (20C), and at least a permeable separation element,
**characterized in that**
it comprises:
- a first type of separation element (20E), of the ion exchange element type, being permeable to at least a first substance to be removed from at least a portion of said fluid,
- a second type of separation element (20D), of the ion exchange type, not being permeable to said first substance and permeable to at least a second substance,
- a plurality of channels (CE1, CE2, CC, CP) delimited between said electrodes (20B, 20C) and/or said separation elements (20E, 20D),
- first collecting means (P) of a portion of said fluid from which said substance must be extracted or the fluid to be purified,
- second collecting means (S, AC) of a portion of said fluid provide to receive said first substance or the fluid to be contaminated,
- means (SP1, SP2, SS1, SS2) in association with at least said first and/or second collecting means (P, S, AC) for detecting the features of at least a part of the fluid,
- circulation means (12, 22, 23 15, 21, 24) for obtaining a substantially closed circuit and/or a continuous circulation of said fluid between said collecting means (P, S) and said channels (CE1, CE2, CC, CP) of said cell (20) for purifying at least a part of the fluid,
- controlling means (SCE) comprising at least one electronic controller, and receiving information from said means (SP1, SP2, SS1, SS2) for controlling at least said cell (20) and the fluid circulation until a preset purifying value of said fluid is reached.

57. A treatment or purification system according to claim 56, **characterized in that** said means (SP1, SP2, SS1, SS2) in association with at least said first and/or second collecting means (P, S, AC) for detecting the features of at least a part of the fluid, comprise:
- first sensing means (SP1, SP2) located in said first collecting means (P) for detecting the features of at least a part of the fluid, and/or
- second sensing means (SS1, SS2) located in said second collecting means (S, AC) for detecting the features of at least a part of the fluid.

## Revendications

1. Appareil ménager utilisant un fluide, comportant un système de purification ou de traitement du type dans lequel au moins une substance doit être éliminée d'au moins une partie dudit fluide, en particulier un système d'adoucissement d'eau, ledit système comprenant au moins une cellule électrochimique, d'électrodialyse ou d'électro-osmose (20), ayant une électrode positive (20B) et une électrode négative (20C), et au moins un élément de séparation perméable, **caractérisé en ce qu'**il fournit :
- un premier type d'élément de séparation (20E) du type élément à échange ionique, perméable à au moins une première substance devant être éliminée d'au moins une partie dudit fluide,
- un deuxième type d'élément de séparation (20D) du type à échange ionique, non perméable à ladite première substance et perméable à au moins une deuxième substance,
- une pluralité de canaux (CE1, CE2, CC, CP) délimités entre lesdites électrodes (20B, 20C) et/ou lesdits éléments de séparation (20E, 20D),
- des premiers moyens de collection (P) d'une partie dudit fluide duquel ladite substance doit être extraite ou du fluide à purifier,
- des deuxièmes moyens de collection (S, AC) d'une partie dudit fluide prévus pour recevoir ladite première substance ou le fluide à contaminer,
- des moyens (SP1, SP2, SS1, SS2) associés au moins auxdits premiers et/ou deuxièmes moyens de collection (P, S, AC) permettant de détecter les caractéristiques d'au moins une partie du fluide,
- des moyens de circulation (12, 22, 23, 15, 21, 24) permettant d'obtenir un circuit sensiblement fermé et/ou une circulation continue dudit fluide entre lesdits moyens de collection (P, S) et lesdits canaux (CE1, CE2, CC, CP) de ladite cellule (20) pour purifier au moins une partie du fluide,
- des moyens de commande (SCE) comprenant au moins un dispositif de commande électronique, et recevant des informations desdits moyens (SP1, SP2, SS1, SS2) pour commander au moins ladite cellule (20) et la circulation de fluide jusqu'à ce qu'une valeur de purification prédéfinie dudit fluide soit atteinte.

2. Appareil ménager selon la revendication 1, **caractérisé en ce que** lesdits moyens (SP1, SP2, SS1, SS2), associés au moins auxdits premiers et/ou deuxièmes moyens de collection (P, S, AC), permettant de détecter les caractéristiques d'au moins une partie du fluide, comprennent :
- des premiers moyens de détection (SP1, SP2) situés dans'lesdits premiers moyens de collection (P) permettant de détecter les caractéristiques d'au moins une partie du fluide, et/ou
- des deuxièmes moyens de détection (SS1, SS2) situés dans lesdits deuxièmes moyens de collection (S, AC) permettant de détecter les caractéristiques d'au moins une partie du fluide.

3. Appareil ménager selon la revendication 1, **caractérisé en ce que** la vitesse d'écoulement du fluide dans lesdits canaux (CE1, CE2, CC, CP) est modifiée par les moyens de commande (SCE) en fonction de mesures effectuées selon des algorithmes ou des tables de données prédéterminés.

4. Appareil ménager selon la revendication 1,
**caractérisé en ce que** ledit système d'adoucissement d'eau est totalement ou partiellement intégré dans un dispositif en particulier composé de matériau thermoplastique.

5. Appareil ménager selon la revendication 1, **caractérisé en ce que** lesdits premiers moyens de collection (P) sont reliés de manière hydraulique en amont à ladite cellule (20), de façon à recevoir le fluide à purifier avant qu'il s'écoule dans ladite cellule (20), et/ou **en ce que** lesdits deuxièmes moyens de collection (S) sont reliés de manière hydraulique en amont à ladite cellule (20), de façon à recevoir le fluide à contaminer avant qu'il s'écoule dans ladite cellule (20).

6. Appareil ménager selon la revendication 1,
**caractérisé en ce qu'**il fournit des premiers moyens de dosage ou mesure (SP1) de la quantité ou des caractéristiques du fluide à purifier, qui est fourni auxdits premiers moyens de collection (P), et/ou **en ce qu'**il fournit des deuxièmes moyens de dosage ou mesure (SS1) de la quantité ou des caractéristiques dudit fluide à contaminer, qui est fourni auxdits deuxièmes moyens de collection (S).

7. Appareil ménager selon la revendication 1,
**caractérisé en ce que** lesdits canaux (CE1, CE2, CC, CP) comprennent :
- un ou plusieurs premiers canaux (CP), dans lesquels va s'écouler ledit fluide à purifier, lesdits premiers canaux étant délimités par un premier type d'élément de séparation (20E) et un deuxième type d'élément de séparation (20D) ;
- deux deuxièmes canaux (CE1, CE2, CC) ou plus, dans lesquels va s'écouler un fluide, prévus pour recevoir ladite première substance à éliminer du fluide à purifier et s'écoulant dans les premiers canaux (SP),
ou fluide à contaminer, chacun desdits deuxièmes canaux (CE1, CE2, CC) étant délimités par un premier type d'élément de séparation (20E) et un deuxième type d'élément de séparation (20D) ou s'étendant entre l'une desdites électrodes (20B, 20C) et l'un desdits éléments de séparation (20D, 20E).

8. Appareil ménager selon la revendication 1 ou 7, **caractérisé en ce que** ledit premier type d'élément de séparation (20E) est une membrane d'échange ionique cationique et/ou **en ce que** ledit deuxième type d'élément de séparation (20D) est une membrane d'échange ionique anionique.

9. Appareil ménager selon la revendication 7, **caractérisé en ce que** lesdits premiers moyens de collection (P) sont reliés de manière hydraulique auxdits premiers canaux (CP) et **en ce que** lesdits deuxièmes moyens de collection (S) sont reliés de manière hydraulique auxdits deuxièmes canaux (CE1, CE2, CC) .

10. Appareil ménager selon la revendication précédente, **caractérisé en ce qu'**il fournit des premiers moyens de circulation (12, 23, 24) permettant d'obtenir ladite circulation continue dudit fluide à purifier entre lesdits premiers moyens de collection (P) et lesdits premiers canaux (CP), et/ou **en ce qu'**il fournit des deuxièmes moyens de circulation (15, 21, 22) permettant d'obtenir ladite circulation continue dudit fluide à contaminer entre lesdits deuxièmes moyens de collection (S) et lesdits deuxièmes et/ou troisièmes canaux (CE1, CE2, CC).

11. Appareil ménager selon la revendication 10, **caractérisé en ce que** lesdits moyens de commande (SCE) fonctionnent de manière à activer lesdits premiers moyens de circulation (12, 23, 24) et/ou lesdits deuxièmes moyens de circulation (15, 21, 22) simultanément pour permettre la génération dudit champ électrique entre lesdites électrodes (20B, 20C).

12. Appareil ménager selon la revendication 1,
**caractérisé en ce que** lesdits moyens de commande (SCE) fonctionnent pour inverser périodiquement la polarité desdites électrodes (20B, 20C), en particulier pour inverser les fonctions desdits premiers moyens de collection (P) et desdits deuxièmes moyens de collection (S), de manière à collecter ledit fluide à contaminer dans lesdits premiers moyens de collection (P) et à collecter ledit fluide à purifier dans lesdits deuxièmes moyens de collection, et **en ce que** le fluide à contaminer circule dans lesdits premiers canaux (CP) et le fluide à purifier circule dans lesdits deuxièmes canaux (CE1, CE2, CC).

13. Appareil ménager selon la revendication 4 ou 12, **caractérisé en ce que** lesdits moyens de commande (SCE) fonctionnent de manière à modifier le dosage de la quantité dudit fluide à contaminer dans les moyens de collection respectifs (P, S) en fonction de la quantité initiale de ladite première substance dans le fluide d'admission de l'appareil ménager.

14. Appareil ménager selon au moins l'une des revendications précédentes, **caractérisé en ce que** lesdits moyens de commande (SCE) fonctionnent de manière à commander et maintenir le débit du fluide à une valeur prédéfinie au cours de ladite circulation continue, et/ou fonctionnent de manière à modifier les conditions et/ou la durée de ladite circulation continue.

15. Appareil ménager selon les revendications 1 à 13, **caractérisé en ce que** lesdits moyens de commande fonctionnent de manière à commander et modifier le débit du fluide pendant ladite circulation continue, en particulier en fonction de valeurs prédéfinies ou calculées.

16. Appareil ménager selon au moins l'une des revendications précédentes, **caractérisé en ce qu'**il fournit des moyens de pré-traitement (PF, SF, UV) du fluide avant qu'il s'écoule dans ladite cellule (20), en particulier des moyens de filtrage (PF, SP) et/ou des moyens de décantation et/ou des moyens de désinfection du fluide (UV).

17. Appareil ménager selon les revendications 3 et 4, **caractérisé en ce que** lesdits moyens de commande (SCE) fonctionnent de manière à utiliser le même fluide à contaminer pour une pluralité de procédés de purification, ou à des fins de traitement d'une pluralité de quantités de fluide à purifier.

18. Appareil ménager selon au moins l'une des revendications précédentes, **caractérisé en ce que** lesdits moyens de commande (SCE) fonctionnent de manière à inverser l'écoulement de fluide dans ladite cellule (20) et/ou à obtenir un lavage à contre-courant desdits canaux (CE1, CE2, CP, CC) et/ou desdites électrodes (20B, 20C) et desdits éléments de séparation (20E, 20D).

19. Appareil ménager selon la revendication 1, **caractérisé en ce que** lesdits moyens de commande (SCE) fonctionnent de manière à modifier la valeur de ladite tension et/ou dudit courant électrique, et/ou fonctionnent de manière à modifier les procédures d'alimentation desdites électrodes (20B, 20C) dans le cadre d'un même procédé de purification.

20. Appareil ménager selon au moins l'une des revendications précédentes, **caractérisé en ce qu'**il fournit des moyens de détection permettant de détecter la température ambiante à proximité de ladite cellule (20) et/ou du fluide à purifier, afin de modifier les paramètres de fonctionnement de ladite cellule (20).

21. Appareil ménager selon au moins l'une des revendications précédentes, **caractérisé en ce qu'**il fournit des moyens de détection (SP1, SP2, SS1, SS2) permettant de détecter les caractéristiques dudit fluide, en particulier ses caractéristiques "quantitatives", comme le débit, la pression, le niveau, la température et/ou ses caractéristiques chimiques ou électrochimiques "qualitatives" comme la conductivité, le degré de dureté, le degré d'acidité ou le pH.

22. Appareil ménager selon la revendication 1, **caractérisé en ce qu'**il fournit un circuit de circulation supplémentaire et/ou indépendant (30A, 30B, 31-34) pour un fluide ou une solution de lavage desdites électrodes (20B, 20C) ou desdits canaux (CE1, CE2).

23. Appareil ménager selon la revendication précédente, **caractérisé en ce que** les deuxièmes canaux (CE1, CE2) qui s'étendent entre l'une desdites électrodes (20B, 20C) et l'un desdites éléments de séparation (20D, 20E) sont reliés entre eux de manière hydraulique, en particulier en parallèle.

24. Appareil ménager selon au moins l'une des revendications précédentes, **caractérisé en ce que** les éléments de séparation (20E, 20D), qui délimitent les deuxièmes canaux (CE1, CE2) comprenant lesdites électrodes (20B, 20C) sont du même type, en particulier dudit premier type et/ou du type cationique et/ou sélectif aux ions monovalents.

25. Appareil ménager selon au moins l'une des revendications 22 à 24, **caractérisé en ce qu'**il fournit des moyens permettant de compléter et/ou remplacer à intervalles réguliers ledit fluide ou ladite solution de lavage desdites électrodes (20B, 20C) ou desdits canaux (CE1, CE2).

26. Appareil ménager selon la revendication 1, **caractérisé en ce qu'**il fournit des moyens permettant de modifier les durées et/ou valeurs de l'alimentation en tension électrique desdites électrodes (CE1, CE2) en fonction du degré de conductivité du fluide, afin d'atteindre ladite valeur de purification prédéfinie.

27. Appareil ménager selon au moins l'une des revendications précédentes, **caractérisé en ce que** lesdits moyens de commande (SCE) fonctionnent de manière à réguler le courant électrique circulant dans ladite cellule (20) et/ou empêchent un courant électrique de dépasser une limite prédéfinie.

28. Appareil ménager selon au moins l'une des revendications précédentes, **caractérisé en ce que** lesdits moyens de commande (SCE) sont intégrés au, font partie du, ou sont reliés au système de commande de l'appareil ménager.

29. Appareil ménager selon au moins l'une des revendications précédentes, **caractérisé en ce que** lesdits moyens de commande (SCE) sont programmés de manière à actionner d'une façon diversifiée ledit système de purification ou traitement en fonction des cycles de fonctionnement de l'appareil ménager et/ou sont programmés de manière à commander le fonctionnement de tous les moyens d'actionnement (4, 6) ou moyens de détection de l'appareil ménager.

30. Procédé de traitement ou de purification d'un fluide, réalisé dans un appareil ménager, du type dans lequel au moins une substance doit être éliminée d'au moins une partie dudit fluide, en particulier un procédé d'adoucissement d'eau, dans lequel est prévue l'utilisation d'une cellule électrochimique, d'électrodialyse ou d'électro-osmose (20), ayant une électrode positive (20B) et une électrode négative (20C) et au moins un élément de séparation perméable, et dans lequel on prévoit :
- un premier type d'élément de séparation (20E), du type élément à échange ionique, perméable à au moins une première substance devant être éliminée d'au moins une partie dudit fluide,
- un deuxième type d'élément de séparation (20D) du type à échange ionique, non perméable à ladite première substance et perméable à au moins une deuxième substance,
- une pluralité de canaux (CE1, CE2, CC, CP) délimités entre lesdites électrodes (20B, 20C) et/ou lesdits éléments de séparation (20E, 20D),
- des premiers moyens de collection (P) d'une partie dudit fluide duquel ladite substance doit être extraite ou du fluide à purifier,
- des deuxièmes moyens de collection (S, AC) d'une partie dudit fluide prévus pour recevoir ladite première substance ou le fluide à contaminer,
- des moyens (SP1, SP2, SS1, SS2) associés au moins auxdits premiers et/ou deuxième moyens de collection (P, S, AC) permettant de détecter les caractéristiques d'au moins une partie du fluide,
- des moyens de circulation (12, 22, 23, 15, 21, 24) permettant d'obtenir un circuit sensiblement fermé et/ou une circulation continue dudit fluide entre lesdits moyens de collection (P, S) et lesdits canaux (CE1, CE2, CC, CP) de ladite cellule (20) pour purifier au moins une partie du fluide,
- des moyens de commande (SCE) comprenant au moins un dispositif de commande électronique, et recevant des informations desdits moyens (SP1, SP2, SS1, SS2) pour commander au moins ladite cellule (20) et la circulation de fluide jusqu'à ce qu'une valeur de purification prédéfinie dudit fluide soit atteinte.

31. Procédé selon la revendication 30,
**caractérisé en ce que** lesdits moyens (SP1, SP2, SS1, SS2) associés au moins auxdits premiers et/ou deuxième moyens de collection (P, S, AC) permettant de détecter les caractéristiques d'au moins une partie du fluide, comprennent :
- des premiers moyens de détection (SP1, SP2) situés dans lesdits premiers moyens de collection (P) permettant de détecter les caractéristiques d'au moins une partie du fluide, et/ou
- des deuxièmes moyens de détection (SS1, SS2) situés dans lesdits deuxièmes moyens de collection (S, AC) permettant de détecter les caractéristiques d'au moins une partie du fluide.

32. Procédé selon la revendication 30, **caractérisé en ce que** qu'il prévoit un dosage et une collection dans un premier conteneur (P) d'une première quantité dudit fluide ou fluide à purifier, duquel ladite première substance doit être extraite, et/ou **en ce qu'**il prévoit une dosage et une collection dans un deuxième conteneur (S) d'une deuxième quantité dudit fluide ou fluide à contaminer, auquel doit être ajoutée ladite première substance.

33. Procédé selon la revendication 30, **caractérisé en ce qu'**il prévoit la détection des caractéristiques ou de la valeur de purification du fluide traité par ladite cellule (20) et/ou du fluide fourni auxdits moyens de collection (P, S) et/ou fournis à la cellule (20) et/ou du fluide d'admission de l'appareil ménager.

34. Procédé selon la revendication 30, **caractérisé en ce que** ledit fluide provient d'une conduite principale reliée à l'appareil ménager, ledit fluide étant en particulier de l'eau.

35. Procédé selon les revendications 32 et 33, **caractérisé en ce que** ladite deuxième quantité de fluide est calculée en fonction de la quantité de ladite première substance dans ledit fluide d'admission de l'appareil ménager et/ou dans ledit fluide à contaminer.

36. Procédé selon la revendication 30, **caractérisé en ce que** le fluide ne sera pas purifié si la quantité de ladite première substance dans ledit fluide utilisé est inférieure à ladite valeur de purification prédéfinie.

37. Procédé selon la revendication 32, **caractérisé en ce que** ledit fluide à purifier et ledit fluide à contaminer sont pré-traités et/ou filtrés et/ou désinfectés et/ou mis à décanter avant qu'il s'écoulent dans ladite cellule (20) ou avant le procédé de purification.

38. Procédé selon la revendication 32, **caractérisé en ce que** ledit fluide à purifier circule dans les premiers canaux (CP) de ladite cellule (20) et **en ce que** ledit fluide à contaminer circule dans les deuxièmes canaux (CE1, CE2, CC) de ladite cellule (20), en particulier ledit fluide s'écoule à travers lesdits canaux (CE1, CE2, CC, CP) du bas vers le haut.

39. Procédé selon au moins l'une des revendications précédentes, **caractérisé en ce que** le débit du fluide pendant ladite circulation continue est maintenu en permanence aux valeurs prédéfinies et/ou modifié.

40. Procédé selon au moins l'une des revendications 30 à 39, **caractérisé en ce que** la durée de ladite circulation continue est variable, en fonction de valeurs prédéfinies ou calculées, en particulier en fonction de la quantité de ladite substance dans ledit fluide d'admission et/ou **en ce que** ladite circulation continue est exécutée pendant une période de temps prédéfinie.

41. Procédé selon la revendication 30, **caractérisé en ce que** ladite valeur de purification prédéfinie est variable dans le cadre d'un même cycle de fonctionnement de l'appareil ménager, en particulier selon la fonction que doit remplir ledit fluide purifié au cours du cycle.

42. Procédé selon la revendication 32, **caractérisé en ce que** le même fluide à contaminer est utilisé pour une pluralité de procédés de purification, c'est-à-dire à des fin de traitement d'une pluralité des quantités dudit premier fluide.

43. Procédé selon la revendication 32, **caractérisé en ce que**, lorsque ladite valeur de purification prédéfinie est atteinte, le fluide purifié est acheminé jusqu'à un bac de l'appareil ménager, en particulier pour exécuter des étapes de lavage à chaud.

44. Procédé selon la revendication 32, **caractérisé en ce que** le fluide contaminé est refoulé de l'appareil ménager sans être utilisé par celui-ci ou **en ce qu'**il est utilisé pendant un cycle de fonctionnement de l'appareil ménager et/ou **en ce qu'**il est acheminé jusqu'à un bac de l'appareil ménager, en particulier pour exécuter des étapes de lavage à froid.

45. Procédé selon au moins l'une des revendications précédentes, **caractérisé en ce qu'**il prévoit un lavage à contre-courant desdits canaux (CE1, CE2, CP, CC) et/ou desdites électrodes (20B, 20C).

46. Procédé selon la revendication 30, **caractérisé en ce que** ladite tension et/ou ledit courant présente une valeur constante ou une valeur variable.

47. Procédé selon la revendication 30, **caractérisé en ce que** les procédures d'alimentation desdites électrodes (20B, 20C) sont modifiées dans le cadre d'un même procédé de purification.

48. Procédé selon la revendication 30, **caractérisé en ce qu'**il prévoit une inversion de polarité desdites électrodes (20B, 20C) à intervalles réguliers, en particulier, ladite inversion de polarité se produit pendant une période fixe, à la fin de chaque procédure de purification unique.

49. Procédé selon la revendication 48, **caractérisé en ce qu'**il prévoit plus d'inversions de polarité au cours d'une même procédure de purification.

50. Procédé selon les revendications 38 et 48, **caractérisé en ce qu'**il prévoit une inversion des fonctions d'au moins lesdits premier et deuxième conteneurs (P, S), de manière à collecter ledit fluide à contaminer dans ledit premier conteneur (P) et collecter ledit fluide à purifier dans ledit deuxième conteneur (S), et **en ce que** le fluide à contaminer circule dans lesdits premiers canaux (CP) et le fluide à purifier circule dans lesdits deuxièmes canaux (CE1, CE2, CC).

51. Procédé selon la revendication 30, **caractérisé en ce que** les durées et/ou les valeurs de la tension d'alimentation électrique desdites électrodes (CE1, CE2) sont variables, en fonction du degré de conductivité du fluide, afin d'atteindre ladite valeur de purification prédéfinie.

52. Procédé selon au moins l'une des revendications précédentes, **caractérisé en ce qu'**il prévoit l'aspiration des gaz produits à l'intérieur de ladite cellule (20).

53. Procédé selon la revendication 48, **caractérisé en ce qu'**il prévoit la détection de la température ambiante à proximité de ladite cellule (20) et/ou du fluide à purifier, afin de modifier les paramètres de fonctionnement de ladite cellule (20).

54. Appareil ménager selon une ou plusieurs des revendications précédentes 1 à 29, **caractérisé en ce qu'**il comprend un système de commande.

55. Appareil ménager selon la revendication précédente, **caractérisé en ce que** ledit système de commande comprend au moins un microprocesseur ou un microcontrôleur et des moyens de mémoire appropriés, lesdits moyens étant en particulier prévus pour contenir des tables de données et/ou des programmes d'élaboration permettant de détecter et/ou calculer des valeurs de mesure ou des limites de référence et/ou pour faire fonctionner les dispositifs d'actionnement du système appropriés.

56. Système de traitement ou de purification d'un fluide, approprié pour être utilisé avec ou adapté à un appareil ménager, du type dans lequel au moins une substance doit être éliminée d'au moins une partie dudit fluide, en particulier un système d'adoucissement d'eau, ledit système comprenant au moins une cellule électrochimique, d'électrodialyse ou d'électro-osmose (20), ayant une électrode positive (20B) et une électrode négative (20C) et au moins un élément de séparation perméable,
**caractérisé en ce qu'**il comprend :
- un premier type d'élément de séparation (20E) du type élément à échange ionique, perméable à au moins une première substance devant être éliminée d'au moins une partie dudit fluide,
- un deuxième type d'élément de séparation (20D) du type à échange ionique, non perméable à ladite première substance et perméable à au moins une deuxième substance,
- une pluralité de canaux (CE1, CE2, CC, CP) délimités entre lesdites électrodes (20B, 20C) et/ou lesdits éléments de séparation (20E, 20D),
- des premiers moyens de collection (P) d'une partie dudit fluide duquel ladite substance doit être extraite ou du fluide à purifier,
- des deuxièmes moyens de collection (S, AC) d'une partie dudit fluide prévus pour recevoir ladite première substance ou le fluide à contaminer,
- des moyens (SP1, SP2, SS1, SS2) associés au moins auxdits premiers et/ou deuxièmes moyens de collection (P, S, AC) permettant de détecter les caractéristiques d'au moins une partie du fluide,
- des moyens de circulation (12, 22, 23, 15, 21, 24) permettant d'obtenir un circuit sensiblement fermé et/ou une circulation continue dudit fluide entre lesdits moyens de collection (P, S) et lesdits canaux (CE1, CE2, CC, CP) de ladite cellule (20) pour purifier au moins une partie du fluide,
- des moyens de commande (SCE) comprenant au moins un dispositif de commande électronique, et recevant des informations desdits moyens (SP1, SP2, SS1, SS2) pour commander au moins ladite cellule (20) et la circulation de fluide jusqu'à ce qu'une valeur de purification prédéfinie dudit fluide soit atteinte.

57. Système de traitement ou purification selon la revendication 56, **caractérisé en ce que** lesdits moyens (SP1, SP2, SS1, SS2) associés au moins auxdits premiers et/ou deuxièmes moyens de collection (P, S, AC) permettant de détecter les caractéristiques d'au moins une partie du fluide, comprennent :
- des premiers moyens de détection (SP1, SP2) situés dans lesdits premiers moyens de collection (P) afin de détecter les caractéristiques d'au moins une partie du fluide, et/ou
- des deuxièmes moyens de détection (SS1, SS2) situés dans lesdits deuxièmes moyens de collection (S, AC) afin de détecter les caractéristiques d'au moins une partie du fluide.

## Patentansprüche

1. Haushaltsgerät, welches eine Flüssigkeit nutzt und ein Reinigungs- oder Behandlungssystem desjenigen Typs umfasst, in welchem mindestens eine Substanz aus mindestens einem Teil der Flüssigkeit entfernt werden muss, insbesondere ein Wasserenthärtungssystem, wobei das System mindestens eine e-lektro-chemische, Elektro-Dialyse- oder Elektro-Osmose-Zelle (20) mit einer positiven Elektrode (20B) und einer negativen Elektrode (20C) und mindestens ein permeables Separationselement umfasst, **dadurch gekennzeichnet, dass** das Gerät umfasst:
- ein erstes Separationselement (20E) eines lonenaustauschelement-Typs, welches für mindestens eine erste aus mindestens einem Teil der Flüssigkeit zu entfernenden Substanz permeabel ist,
- ein zweites Separationselement (20D) eines lonenaustausch-Typs, welcher für die erste Substanz nicht permeabel und für mindestens eine zweite Substanz permeabel ist,
- eine Mehrzahl von Kanälen (CE1, CE2, CC, CP), welche von den Elektroden (20B, 20C) und/oder den Separationselementen (20E, 20D) umschlossen sind,
- erste Ansammlungsmittel (P) für einen Teil der Flüssigkeit, aus welcher die Substanz extrahiert werden muss, oder für die zu reinigende Flüssigkeit,
- zweite Ansammlungsmittel (S, AC) für einen Teil der Flüssigkeit, welche zur Aufnahme der ersten Substanz vorgesehen ist, oder für die zu kontaminierende Flüssigkeit,
- Mittel (SP1, SP2, SS1, SS2), die den mindestens ersten und/oder zweiten Ansammlungsmitteln (P, S, AC) zugeordnet sind, zum Detektieren der Merkmale mindestens eines Teils der Flüssigkeit,
- Zirkulationsmittel (12, 22, 23, 15, 21, 24) zum Bereitstellen eines im Wesentlichen geschlossenen Kreislaufs und/oder einer kontinuierlichen Zirkulation der Flüssigkeit zwischen den Ansammlungsmitteln (P, S) und den Kanälen (CE1, CE2, CC, CP) der Zelle (20) zum Reinigen mindestens eines Teils der Flüssigkeit,
- Steuerungsmittel (SCE), welche mindestens einen elektronischen Controller umfassen und von den Mitteln (SP1, SP2, SS1, SS2) Informationen empfangen, zum Steuern mindestens der Zelle (20) und der Flüssigkeitszirkulation bis ein vorgewählter Reinigungswert der Flüssigkeit erreicht ist.

2. Haushaltsgerät nach Anspruch 1, **dadurch gekennzeichnet, dass** die Mittel (SP1, SP2, SS1, SS2) zum Detektieren der Merkmale mindestens eines Teils der Flüssigkeit, welche mindestens den ersten und/oder den zweiten Ansammlungsmitteln (P, S, AC) zugeordnet sind, umfassen:
- erste sensorische Mittel (SP1, SP2), welche in den ersten Ansammlungsmitteln (P) angeordnet sind, zum Detektieren der Merkmale mindestens eines Teils der Flüssigkeit und/oder
- zweite sensorische Mittel (SS1, SS2), welche in den zweiten Ansammlungsmitteln (S, AC) angeordnet sind, zum Detektieren der Merkmale mindestens eines Teils der Flüssigkeit.

3. Haushaltsgerät nach Anspruch 1, **dadurch gekennzeichnet, dass** die Durchflussgeschwindigkeit der Flüssigkeit in den Kanälen (CE1, CE2, CC, CP) basierend auf gemäß vorbestimmten Algorithmen und Datentabellen ausgeführten Messungen von den Steuerungsmitteln (SCE) verändert wird.

4. Haushaltsgerät nach Anspruch 1, **dadurch gekennzeichnet, dass** das Wasserenthärtungssystem ganz oder teilweise in eine Vorrichtung integriert ist, welche insbesondere aus thermoplastischem Material hergestellt ist.

5. Haushaltsgerät nach Anspruch 1, **dadurch gekennzeichnet, dass** die ersten Ansammlungsmittel (P) hydraulisch stromaufwärts mit der Zelle (20) derart gekoppelt sind, dass die zu reinigende Flüssigkeit, bevor sie in die Zelle (20) fließt aufgenommen werden kann, und/oder dadurch dass die zweiten Ansammlungsmittel (S) hydraulisch stromaufwärts mit der Zelle (20) derart gekoppelt sind, dass die zu kontaminierende Flüssigkeit, bevor sie in die Zelle (20) fließt, aufgenommen werden kann.

6. Haushaltsgerät nach Anspruch 1, **dadurch gekennzeichnet, dass** es erste Dosierungs- oder Messmittel (SP1) aufweist für die Menge oder die Merkmale der zu reinigenden Flüssigkeit, welche den ersten Ansammlungsmitteln (P) zugeführt wird, und/oder dass es zweite Dosierungs- oder Messmittel (SS1) aufweist, für die Menge oder die Merkmale der zu kontaminierenden Flüssigkeit, welche den zweiten Ansammlungsmitteln (S) zugeführt wird.

7. Haushaltsgerät nach Anspruch 1, **dadurch gekennzeichnet, dass** die Kanäle (CE1, CE2, CC, CP) umfassen:
- einen oder mehrere erste Kanäle (CP), in welche die zu reinigende Flüssigkeit fließt, wobei die ersten Kanäle von einem ersten Typ eines Separationselementes (20E) und einem zweiten Typ eines Separationselementes (20D) umschlossen sind;
- zwei oder mehrere zweite Kanäle (CE1, CE2, CC), in welchen eine Flüssigkeit fließt, und welche vorgesehen sind, um eine erste Substanz aufzunehmen, aus der in den ersten Kanälen (CP) fließenden, zu reinigenden Flüssigkeit, oder die zu kontaminierende Flüssigkeit, wobei jeder der zweiten Kanäle (CE1, CE2, CC) von einem ersten Typ eines Separationselements (20E) und einem zweiten Typ eines Separationselements (20D) umschlossen ist, oder sich zwischen einer der Elektroden (20B, 20C) und einem der Separationselemente (20D, 20E) erstreckt.

8. Haushaltsgerät nach Anspruch 1 oder 7, **dadurch gekennzeichnet, dass** der erste Typ eines Separationselements (20E) eine kationische Ionenaustauschmembran ist und/oder der zweite Typ eines Separationselements (20D) eine anionische lonenaustauschmembran ist.

9. Haushaltsgerät nach Anspruch 7, **dadurch gekennzeichnet, dass** die ersten Ansammlungsmittel (P) hydraulisch mit den ersten Kanälen (CP) und die zweiten Ansammlungsmittel (S) hydraulisch mit den zweiten Kanälen (CE1, CE2, CC) gekoppelt sind.

10. Haushaltsgerät nach dem vorstehenden Anspruch, **dadurch gekennzeichnet, dass** es erste Zirkulationsmittel (12, 23, 24) zum Bereitstellen der kontinuierlichen Zirkulation der zu reinigenden Flüssigkeit zwischen den ersten Ansammlungsmitteln (P) und den ersten Kanälen (CP) aufweist, und/oder dass es zweite Zirkulationsmittel (15, 21, 22) zum Bereitstellen der kontinuierlichen Zirkulation der zu kontaminierenden Flüssigkeit zwischen den zweiten Ansammlungsmitteln (S) und den zweiten und/oder dritten Kanälen (CE1, CE2, CC) aufweist.

11. Haushaltsgerät nach Anspruch 10, **dadurch gekennzeichnet, dass** die Steuerungsmittel (SCE) ein Aktivieren der ersten Zirkulationsmittel (12, 23, 24) und/oder der zweiten Zirkulationsmittel (15, 21, 22) gleichzeitig mit der Erzeugung des elektrischen Feldes zwischen den Elektroden (20B, 20C) bewirken.

12. Haushaltsgerät nach Anspruch 1, **dadurch gekennzeichnet, dass** die Kontrollmittel (SCE) ein periodisches Umkehren der Polarität der Elektroden (20B, 20C), insbesondere ein Umkehren der Funktionen der ersten Ansammlungsmittel (P) und der zweiten Ansammlungsmittel (S) bewirken, um dadurch die zu kontaminierende Flüssigkeit in den ersten Ansammlungsmitteln (P) und die zu reinigende Flüssigkeit in den zweiten Ansammlungsmitteln (S) anzusammeln, und dadurch dass die zu kontaminierende Flüssigkeit in den ersten Kanälen (CP) und die zu reinigende Flüssigkeit in den zweiten Kanälen (CE1, CE2, CC) zirkuliert wird.

13. Haushaltsgerät nach Anspruch 4 oder 12, **dadurch gekennzeichnet, dass** die Steuerungsmittel (SCE) bewirken, dass die Dosierung der Menge der zu kontaminierenden Flüssigkeit im jeweiligen Ansammlungsmittel (P, S) in Abhängigkeit vom Anfangsgehalt der ersten Substanz in der Einlassflüssigkeit in das Haushaltsgerät geändert wird.

14. Haushaltsgerät nach mindestens einem der vorstehenden Ansprüche, **dadurch gekennzeichnet, dass** die Steuerungsmittel (SCE) bewirken, dass die Durchflussrate der Flüssigkeit im Verlauf der kontinuierlichen Zirkulation auf einen vorbestimmten Wert geregelt und beibehalten wird, und/oder dass die Bedingungen und/oder die Dauer der kontinuierlichen Zirkulation geändert wird.

15. Haushaltsgerät nach einem der Ansprüche 1 bis 13, **dadurch gekennzeichnet, dass** die Steuerungsmittel bewirken, dass die Durchflussrate der Flüssigkeit während der kontinuierlichen Zirkulation, insbesondere gemäß den vorgewählten oder berechneten Werten gesteuert und geändert.

16. Haushaltsgerät nach mindestens einem der vorstehenden Ansprüche, **dadurch gekennzeichnet, dass** es Vorbehandlungsmittel (PF, SF, UV) für die Flüssigkeit aufweist bevor sie in die Zelle (20) fließt, insbesondere Filtrierungsmittel (PF, SP) und/oder Dekantierungsmittel und/oder Desinfektionsmittel für die Flüssigkeit (UV).

17. Haushaltsgerät nach den Ansprüchen 3 und 4, **dadurch gekennzeichnet, dass** die Steuerungsmittel (SCE) bewirken, dass die zu kontaminierende Flüssigkeit für eine Mehrzahl von Reinigungsprozessen oder für Behandlungszwecke einer Mehrzahl von zu reinigenden Flüssigkeitsmengen eingesetzt wird.

18. Haushaltsgerät nach mindestens einem der vorstehenden Ansprüche, **dadurch gekennzeichnet, dass** die Steuerungsmittel (SCE) bewirken, dass der Flüssigkeitsdurchfluss in der Zelle (20) umgekehrt wird, und/oder dass eine Gegenstromspülung der Kanäle (CE1, CE2, CP, CC) und/oder der Elektroden (20B, 20C) und der Separationselemente (20E, 20D) bereitgestellt wird.

19. Haushaltsgerät nach Anspruch 1, **dadurch gekennzeichnet, dass** die Steuerungsmittel (SCE) bewirken, dass der Spannungs- und/oder elektrische Stromwert und/oder der Versorgungsablauf der Elektroden (20B, 20C) im Rahmen desselben Reinigungsprozesses geändert wird.

20. Haushaltsgerät nach mindestens einem der vorstehenden Ansprüche, **dadurch gekennzeichnet, dass** es sensorische Mittel zum Detektieren der Raumtemperatur in der Umgebung der Zelle (20) und/oder der zu reinigenden Flüssigkeit aufweist, um die Betriebsparameter der Zelle (20) zu ändern.

21. Haushaltsgerät nach mindestens einem der vorstehenden Ansprüche, **dadurch gekennzeichnet, dass** es sensorische Mittel (SP1, SP2, SS1, SS2) zum Detektieren der Merkmale der Flüssigkeit aufweist, insbesondere ihrer "quantitativen" Merkmale, wie die Durchflussrate, den Druck, das Niveau, die Temperatur und/oder ihrer "qualitativen" oder chemischen oder elektrochemischen Merkmale, wie die Leitfähigkeit, den Härtegrad, den Säuregrad oder den pH-Wert.

22. Haushaltsgerät nach Anspruch 1, **dadurch gekennzeichnet, dass** es einen zusätzlichen und/oder unabhängigen Zirkulationskreislauf (30A, 30B, 31-34) für eine Waschlösung oder für eine Flüssigkeit der Elektroden (20B, 20C) oder der Kanäle (CE1, CE2) aufweist.

23. Haushaltsgerät nach dem vorstehenden Anspruch, **dadurch gekennzeichnet, dass** die zweiten Kanäle (CE1, CE2), welche sich zwischen einer der Elektroden (20B, 20C) und einem der Separationselemente (20D, 20E) erstrecken, hydraulisch insbesondere parallel miteinander gekoppelt sind.

24. Haushaltsgerät nach mindestens einem der vorstehenden Ansprüche, **dadurch gekennzeichnet, dass** die Separationsmittel (20E, 20D), welche die zweiten die Elektroden (20B, 20C) umfassenden Kanäle (CE1, CE2) umschließen und vom selben Typ sind, insbesondere vom ersten Typ und/oder vom kationischen Typ und/oder dass sie selektiv für einwertige Ionen sind.

25. Haushaltsgerät nach mindestens einem der Ansprüche 22 bis 24, **dadurch gekennzeichnet, dass** es Mittel zum gelegentlichen Auffüllen und/oder in regelmäßigen Intervallen Ersetzen der Waschlösung oder der Flüssigkeit der Elektroden (20B, 20C) oder der Kanäle (CE1, CE2) aufweist.

26. Haushaltsgerät nach Anspruch 1, **dadurch gekennzeichnet, dass** es Mittel aufweist, um die Zeitdauern und/oder Werte der elektrischen Versorgungsspannung der Elektroden (CE1, CE2) abhängig von dem Grad der Leitfähigkeit der Flüssigkeit zu ändern, um den vorgegebenen Reinigungswert zu erreichen.

27. Haushaltsgerät nach mindestens einem der vorstehenden Ansprüche, **dadurch gekennzeichnet, dass** die Steuerungsmittel (SCE) bewirken, dass der in der Zelle (20) zirkulierende elektrischen Strom geregelt wird und/oder verhindert wird, dass der elektrisch Strom einen vorgegebenen Grenzwert übersteigt.

28. Haushaltsgerät nach mindestens einem der vorstehenden Ansprüche, **dadurch gekennzeichnet, dass** die Steuerungsmittel (SCE) integriert sind in, oder einen Teil darstellen von, oder gekoppelt sind mit dem Steuerungssystem des Haushaltsgerätes.

29. Haushaltsgerät nach mindestens einem der vorstehenden Ansprüche, **dadurch gekennzeichnet, dass** die Steuerungsmittel (SCE) programmiert sind zum auf vielfältige Weise Ansteuern des Reinigungs- oder Behandlungssystems abhängig von den Betriebszyklen des Haushaltsgeräts und/oder zum Steuern des Betriebs aller Ansteuerungsmittel (4, 6) oder Detektionsmittel des Haushaltsgeräts.

30. In einem Haushaltsgerät eingesetztes Behandlungs- oder Reinigungsverfahren für eine Flüssigkeit, bei welchem mindestens eine Substanz aus mindestens einem Teil der Flüssigkeit entfernet werden muss, insbesondere ein Wasserenthärtungsverfahren, bei welchem die Verwendung einer elektrochemischen, Elektro-Dialyse- oder Elektro-Osmose-Zelle (20) mit einer positiven Elektrode (20B) und einer negativen Elektrode (20C) und mindestens einem permeablen Separationselement vorgesehen ist, und bei welchem vorgesehen ist:
- ein erstes Separationselement (20E) eines lonenaustauschelementen-Typs, welcher für mindestens eine erste aus mindestens einem Teil der Flüssigkeit zu entfernenden Substanz permeabel ist,
- ein zweites Separationselement (20D) eines lonenaustausch-Typs, welches für die erste Substanz nicht permeabel und für mindestens eine zweite Substanz permeabel ist,
- eine Mehrzahl von Kanälen (CE1, CE2, CC, CP), welche von den Elektroden (20B, 20C) und/oder den Separationselementen (20E, 20D) umschlossen sind,
- erste Ansammlungsmittel (P) für einen Teil der Flüssigkeit, von welcher die Substanz zu extrahieren ist, oder für die zu reinigende Flüssigkeit,
- zweite Ansammlungsmittel (S, AC) für einen Teil der Flüssigkeit, die zur Aufnahme der ersten Substanz vorgesehen ist, oder für die zu kontaminierende Flüssigkeit,
- Mittel (SP1, SP2, SS1, SS2), welche mindestens den ersten und/oder zweiten Ansammlungsmitteln (P, S, AC) zugeordnet sind, zum Detektieren der Merkmale mindestens eines Teils der Flüssigkeit,
- Zirkulationsmittel (12, 22, 23, 15, 21, 24) zum Bereitstellen eines im Wesentlichen geschlossenen Kreislaufs und/oder einer kontinuierlichen Zirkulation der Flüssigkeit zwischen den Ansammlungsmitteln (P, S) und den Kanälen (CE1, CE2, CC, CP) der Zelle (20) zum Reinigen mindestens eines Teils der Flüssigkeit,
- Steuerungsmittel (SCE), welche mindestens einen elektronischen Controller umfassen und Informationen von den Mitteln (SP1, SP2, SS1, SS2) zum Steuern mindestens der Zelle (20) und der Flüssigkeitszirkulation empfangen, bis ein vorgegebener Reinigungswert der Flüssigkeit erreicht ist.

31. Verfahren nach Anspruch 30, **dadurch gekennzeichnet, dass** die Mittel (SP1, SP2, SS1, SS2), welche mindestens den ersten und/oder zweiten Ansammlungsmitteln (P, S, AC) zugeordnet sind, zum Detektieren der Merkmale mindestens eines Teils der Flüssigkeit, umfassen:
- erste sensorische Mittel (SP1, SP2), welche in den ersten Ansammlungsmitteln (P) angeordnet sind, zum Detektieren der Merkmale mindestens eines Teils der Flüssigkeit und/oder
- zweite sensorische Mittel (SS1, SS2), welche in den zweiten Ansammlungsmitteln (S, AC) angeordnet sind, zum Detektieren der Merkmale mindestens eines Teils der Flüssigkeit.

32. Verfahren nach Anspruch 30, **dadurch gekennzeichnet, dass** es ein Dosieren und ein Ansammeln einer ersten Menge der Flüssigkeit oder der zu reinigenden Flüssigkeit, von der die erste Substanz extrahiert werden muss, in einem ersten Behälter (P) vorsieht und/oder dass es ein Dosieren und ein Ansammeln einer zweiten Menge der Flüssigkeit oder der zu kontaminierenden Flüssigkeit, zu welcher die erste Substanz hinzugefügt werden muss, in einem zweiten Behälter (S) vorsieht.

33. Verfahren nach Anspruch 30, **dadurch gekennzeichnet, dass** es ein Detektieren von Merkmalen oder des Reinigungswertes der von der Zelle (20) behandelten Flüssigkeit und/oder der den Ansammlungsmitteln (P, S) und/oder der der Zelle (20) zugeführten Flüssigkeit und/oder der Einlassflüssigkeit des Haushaltsgerätes vorsieht.

34. Verfahren nach Anspruch 30, **dadurch gekennzeichnet, dass** die Flüssigkeit von einem Wasserhauptanschluss kommt, welcher mit dem Haushaltsgerät gekoppelt ist, wobei die Flüssigkeit insbesondere Wasser ist.

35. Verfahren nach den Ansprüchen 32 und 33, **dadurch gekennzeichnet, dass** die zweite Menge der Flüssigkeit in Abhängigkeit des Gehalts der ersten Substanz in der Einlassflüssigkeit in das Haushaltsgerät und/oder in der zu kontaminierenden Flüssigkeit berechnet wird.

36. Verfahren nach Anspruch 30, **dadurch gekennzeichnet, dass** die Flüssigkeit nicht gereinigt wird, wenn der Gehalt der ersten Substanz in der benutzten Flüssigkeit geringer als der vorher eingestellte Reinigungswert sein sollte.

37. Verfahren nach Anspruch 32, **dadurch gekennzeichnet, dass** die zu reinigende Flüssigkeit und die zu kontaminierende Flüssigkeit bevor sie in die Zelle (20) fließen und vor dem Reinigungsvorgang vorbehandelt und/oder gefiltert und/oder desinfiziert und/oder dekantiert werden.

38. Verfahren nach Anspruch 32, **dadurch gekennzeichnet, dass** die zu reinigende Flüssigkeit in ersten Kanälen (CP) der Zelle (20) zirkuliert wird und die zu kontaminierende Flüssigkeit in zweiten Kanälen (CE1, CE2, CC) der Zelle (20) zirkuliert wird, insbesondere dadurch, dass die Flüssigkeit durch die Kanäle (CE1, CE2, CC, CP) von unten nach oben fließt.

39. Verfahren nach mindestens einem der vorstehenden Ansprüche, **dadurch gekennzeichnet, dass** die Durchflussrate der Flüssigkeit während der kontinuierlichen Zirkulation konstant auf vorgewählten Werten gehalten und/oder geändert wird.

40. Verfahren nach mindestens einem der Ansprüche 30 bis 39, **dadurch gekennzeichnet, dass** die Dauer der kontinuierlichen Zirkulation entsprechend vorgewählter oder berechneter Werte variabel ist, insbesondere abhängig vom Gehalt der Substanz in der Einlassflüssigkeit und/oder dadurch, dass die kontinuierliche Zirkulation für eine vorgewählte Zeitdauer durchgeführt wird.

41. Verfahren nach Anspruch 30, **dadurch gekennzeichnet, dass** der vorgewählte Reinigungswert im Rahmen desselben Betriebszykluses des Haushaltsgerätes variabel ist, insbesondere gemäß der Funktion, die die gereinigte Flüssigkeit während des Zyklus auszuführen hat.

42. Verfahren nach Anspruch 32, **dadurch gekennzeichnet, dass** dieselbe zu kontaminierende Flüssigkeit für eine Mehrzahl von Reinigungsprozessen eingesetzt wird, d.h. für Behandlungszwecke einer Mehrzahl der ersten Flüssigkeitsmengen.

43. Verfahren nach Anspruch 32, **dadurch gekennzeichnet, dass** die gereinigte Flüssigkeit beim Erreichen des vorgewählten Reinigungswertes einem Behälter des Haushaltsgerätes zugeführt wird, insbesondere zum Ausführen von heißen Waschschritten.

44. Verfahren nach Anspruch 32, **dadurch gekennzeichnet, dass** die kontaminierte Flüssigkeit aus dem Haushaltsgerät ohne durch dieses verwendet zu werden, abgelassen wird, oder dadurch, dass sie während eines Betriebszyklus des Haushaltsgerätesverwendet wird und/oder einem Behälter des Haushaltsgerätes zugeführt wird, insbesondere zum Ausführen kalter Waschschritte.

45. Verfahren nach mindestens einem der vorstehenden Ansprüche, **dadurch gekennzeichnet, dass** es eine Gegenstromspülung der Kanäle (CE1, CE2, CP, CC) und/oder der Elektroden (20B, 20C) vorsieht.

46. Verfahren nach Anspruch 30, **dadurch gekennzeichnet, dass** die Spannung und/oder der Strom einen konstanten oder einen variablen Wert haben.

47. Verfahren nach Anspruch 30, **dadurch gekennzeichnet, dass** die Versorgungsabläufe der Elektroden (20B, 20C) im Rahmen desselben Reinigungsprozesses geändert werden.

48. Verfahren nach Anspruch 30, **dadurch gekennzeichnet, dass** es in regelmäßigen Intervallen eine Polaritätsumkehr der Elektroden (20B, 20C) vorsieht, insbesondere dadurch, dass die Polaritätsumkehr für eine feste Zeitdauer zum Ende jedes einzelnen Reinigungsprozesses auftritt.

49. Verfahren nach Anspruch 48, **dadurch gekennzeichnet, dass** es mehrere Polaritätsumkehrereignisse während desselben Reinigungsprozesses vorsieht.

50. Verfahren nach den Ansprüchen 38 und 48, **dadurch gekennzeichnet, dass** es eine Funktionsumkehr von mindestens dem ersten und dem zweiten Behälter (P, S) vorsieht, um die zu kontaminierende Flüssigkeit in dem ersten Behälter (P) anzusammeln, und um die zu reinigende Flüssigkeit in dem zweiten Behälter (S) anzusammeln, und dadurch, dass die zu kontaminierende Flüssigkeit in den ersten Kanälen (CP) und die zu reinigende Flüssigkeit in den zweiten Kanälen (CE1, CE2, CC) zirkuliert wird.

51. Verfahren nach Anspruch 30, **dadurch gekennzeichnet, dass** die Zeiten und/oder die Werte der elektrischen Versorgungsspannung der Elektroden (CE1, CE2) abhängig vom Grad der Leitfähigkeit der Flüssigkeit variabel sind, um den vorgewählten Reinigungswert zu erreichen.

52. Verfahren nach mindestens einem der vorstehenden Ansprüche, **dadurch gekennzeichnet, dass** es ein Ansaugen der Gase, welche innerhalb der Zelle (20) produziert werden, vorsieht.

53. Verfahren nach Anspruch 48, **dadurch gekennzeichnet, dass** es eine Detektion der Raumtemperatur in der Umgebung der Zelle (20) vorsieht und/oder der zu reinigenden Flüssigkeit, um die Betriebsparameter der Zelle (20) zu ändern.

54. Haushaltsgerät nach einem oder mehreren der vorstehenden Ansprüche 1 bis 29, **dadurch gekennzeichnet, dass** es ein Steuerungssystem umfasst.

55. Haushaltsgerät nach dem vorstehenden Anspruch, **dadurch gekennzeichnet, dass** das Steuerungssystem mindestens einen Mikroprozessor oder einen Mikrocontroller und geeignete Speichermittel umfasst, wobei die Speichermittel insbesondere dafür vorgesehen sind, Datentabellen aufzunehmen und/oder Ausarbeitungsprogramme zum Detektieren und/oder Berechnen von Messwerten oder Referenzschranken und/oder um die geeigneten Systemansteuerungen zu bewirken.

56. Behandlungs- oder Reinigungssystem einer Flüssigkeit, geeignet, um mit einem Haushaltsgerät eingesetzt zu werden oder dafür angepasst zu werden, derart, bei welcher mindestens eine Substanz aus mindestens einem Teil der Flüssigkeit entfernt werden muss, insbesondere ein Wasserenthärtungssystem, wobei das System mindestens eine elektrochemische, Elektro-Dialyse- oder Elektro-Osmose-Zelle (20) umfasst mit einer positiven Elektrode (20B) und einer negativen Elektrode (20C) und mindestens einem durchlässigen Separationselement, **dadurch gekennzeichnet, dass** es um fasst:
- ein erstes Separationselement (20E) eines lonenaustauschelement-Typs, welches für mindestens eine erste aus mindestens einem Teil der Flüssigkeit zu entfernende Substanz permeabel ist,
- ein zweites Separationselement (20D) eines lonenaustausch-Typs, welcher für die erste Substanz nicht permeabel, und für mindestens eine zweite Substanz permeabel ist,
- eine Mehrzahl von Kanälen (CE1, CE2, CC, CP), welche von den Elektroden (20B, 20C) und/oder den Separationselementen (20E, 20D) umschlossen sind,
- erste Ansammlungsmittel (P) für einen Teil der Flüssigkeit, aus welcher die Substanz extrahiert werden muss, oder die zu reinigende Flüssigkeit,
- zweite Ansammlungsmittel (S, AC) für einen Teil der Flüssigkeit, zum Aufnehmen der ersten Substanz oder die zu kontaminierende Flüssigkeit,
- Mittel (SP1, SP2, SS1, SS2) welche den mindestens ersten oder zweiten Ansammlungsmitteln (P, S, AC) zugeordnet sind, zum Detektieren der Merkmale mindestens eines Teils der Flüssigkeit,
- Zirkulationsmittel (12, 22, 23, 15, 21, 24) zum Bereitstellen eines im Wesentlichen geschlossenen Kreislaufs und/oder einer kontinuierlichen Zirkulation der Flüssigkeit zwischen den Ansammlungsmitteln (P, S) und den Kanälen (CE1, CE2, CC, CP) der Zelle (20) zum Reinigen mindestens eines Teils der Flüssigkeit,
- Steuerungsmittel (SCE), welche mindestens einen elektronischen Controller umfassen und von den Mitteln (SP1, SP2, SS, SS2) Informationen empfangen, zum Steuern mindestens der Zelle (20) und der Flüssigkeitszirkulation bis ein vorgewählter Reinigungswert der Flüssigkeit erreicht ist.

57. Behandlungs- oder Reinigungssystem nach Anspruch 56, **dadurch gekennzeichnet, dass** die Mittel (SP1, SP2, SS1, SS2) zum Detektieren der Merkmale mindestens eines Teils der Flüssigkeit, welche mindestens den ersten und/oder zweiten Ansammlungsmitteln (P, S, AC) zugeordnet sind, umfassen:
- erste sensorische Mittel (SP1, SP2), welche in den ersten Ansammlungsmitteln (P) angeordnet sind, zum Detektieren der Merkmale mindestens eines Teils der Flüssigkeit und/oder
- zweite sensorische Mittel (SS1, SS2), welche in den zweiten Ansammlungsmitteln (S, AC) angeordnet sind, zum Detektieren der Merkmale mindestens eines Teils der Flüssigkeit.
